(19)

Europäisches Patentamt
European Patent Office
Office européen des brevets

(11) **EP 3 675 588 A1**

(12) **EUROPEAN PATENT APPLICATION**
published in accordance with Art. 153(4) EPC

(43) Date of publication:
**01.07.2020 Bulletin 2020/27**

(21) Application number: **19757528.5**

(22) Date of filing: **25.02.2019**

(51) Int Cl.:
**H04W 74/00** (2009.01)   **H04W 74/08** (2009.01)
**H04W 48/12** (2009.01)   **H04W 72/14** (2009.01)

(86) International application number:
**PCT/KR2019/002297**

(87) International publication number:
**WO 2019/164377 (29.08.2019 Gazette 2019/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.02.2018 US 201862634770 P**

(71) Applicant: **LG Electronics Inc.**
**07336 SEOUL (KR)**

(72) Inventors:
• **SONG, Huayue**
**Seoul 06772 (KR)**
• **YI, Yunjung**
**Seoul 06772 (KR)**

(74) Representative: **Katérle, Axel**
**Wuesthoff & Wuesthoff**
**Patentanwälte PartG mbB**
**Schweigerstraße 2**
**81541 München (DE)**

(54) **METHOD FOR PERFORMING INITIAL ACCESS IN WIRELESS COMMUNICATION SYSTEM AND APPARATUS THEREFOR**

(57)   This specification provides a method for performing an initial access by using a short transmission time interval (TTI) in a wireless communication system.

More specifically, the method performed by the UE includes: receiving, from an eNB, system information including control information indicating a transmission time of an uplink signal; transmitting a random access preamble to the eNB; receiving, from the eNB, a random access response message including an uplink grant for transmitting the uplink signal in subframe #n; and transmitting, to the eNB, the uplink signal in subframe #n+k based on the control information, in which the k is a natural number smaller than 6.

Accordingly, this specification has an effect that the initial access may be performed quickly by transmitting the uplink transmission of the RACH procedure faster.

[fig. 23]

| | |
|---|---|
| receive system information including control information | S2310 |
| transmit random access preamble | S2320 |
| receive random access response message including uplink grant | S2330 |
| transmit uplink signal | S2340 |

EP 3 675 588 A1

**EP 3 675 588 A1**

**Description**

[Technical Field]

This specification relates to a wireless communication system, and more particularly, to a method for performing quick initial accesses of UEs and an apparatus for supporting the same.

[Background Art]

Mobile communication systems have been developed to provide voice services, while guaranteeing user activity. Service coverage of mobile communication systems, however, has extended even to data services, as well as voice services, and currently, an explosive increase in traffic has resulted in shortage of resource and user demand for a high speed services, requiring advanced mobile communication systems.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive Multiple Input Multiple Output (MIMO), in-band full duplex, non-orthogonal multiple access (NOMA), supporting super-wide band, and device networking, have been researched.

[Disclosure]

[Technical Problem]

This specification provides a method for reducing a processing time of a user equipment (UE) in a wireless communication system.

Furthermore, this specification provides a method for performing a quicker initial access by user equipments (UEs) supporting a short transmission time interval (sTTI) in a wireless communication system.

Furthermore, this specification provides a method for performing a quicker scheduling request procedure by user equipments (UEs) in a connected mode, which support a short transmission time interval (sTTI) in a wireless communication system.

The technical problems solved by the present invention are not limited to the above technical problems and those skilled in the art may understand other technical problems from the following description.

[Technical Solution]

In an aspect, a method for performing, by a UE, an initial access by using a short transmission time interval (TTI) in a wireless communication system includes: receiving, from an eNB, system information including control information indicating a transmission time of an uplink signal; transmitting a random access preamble to the eNB; receiving, from the eNB, a random access response message including an uplink grant for transmitting the uplink signal in subframe #n; and transmitting, to the eNB, the uplink signal in subframe #n+k based on the control information, in which the k is a natural number smaller than 6.

The random access preamble may include capability information of the UE, the capability information of the UE may include information on an earliest transmission time of the transmission time of the uplink signal supportable by the UE, and the uplink grant may include information on a resource for transmitting the uplink signal based on the capability information of the UE.

Furthermore, the random access response message further includes information indicating a state of the UE, and the state of the UE is at one of fast processing only support, short TTI (sTTI) processing of 2 or 3 OFDM symbols three and fast processing support, and sTTI processing of 7 OFDM symbols and fast processing support or fast processing not support.

Furthermore, the system information further includes information on a size of a reception window associated with the random access response message.

Furthermore, the size of the reception window associated with the random access response message is configured for each sTTI processing unit.

Furthermore, the random access preamble includes an identifier indicating whether the UE is a UE supporting the sTTI or a Legacy UE.

Furthermore, the random access preamble is generated based on an RA-RNTI.

Furthermore, the processor is configured to receive multiple PRACH configurations from the eNB, and in the multiple PRACH configurations, a reception window size and a processing time of the random access response message

2

which is supportable for each PRACH configuration are differently configured.

Furthermore, the multiple PRACH configurations further include a target received power value configured differently for each PRACH configuration.

In another aspect, a UE for performing an initial access by using a short transmission time interval (TTI) in a wireless communication system includes: a transmitter for transmitting a radio signal; a receiver for receiving the radio signal; and a processor functionally connected to the transmitter and the receiver, in which the processor is configured to receive, from an eNB, system information including control information indicating a transmission time of an uplink signal, transmit a random access preamble to the eNB, receive, from the eNB, a random access response message including an uplink grant for transmitting the uplink signal in subframe #n, and transmit, to the eNB, the uplink signal in subframe #n+k based on the control information, and the k is a natural number smaller than 6.

[Advantageous Effects]

According to this specification, there is an effect in that by shortening processing time of both a network and a user equipment (UE), more UEs can communicate by accessing the network in a wireless communication network.

Furthermore, according to this specification, there is an effect in that a quicker initial access can be performed by reducing processing of user equipments (UEs) supporting a short transmission time interval (sTTI).

Furthermore, according to this specification, there is an effect in that user equipments (UEs) in a connected mode, which have the short transmission time interval (STTI) can perform a quicker scheduling request procedure in a wireless communication system.

The effects of the present invention are not limited to the above-described effects and other effects which are not described herein will become apparent to those skilled in the art from the following description.

[Description of Drawings]

The accompanying drawings, which are included to provide a further understanding of the invention and are incorporated in and constitute a part of this application, illustrate embodiment(s) of the invention and together with the description serve to explain the principle of the invention.

FIG. 1 illustrates a schematic structure a network structure of an evolved universal mobile telecommunication system (E-UMTS) to which the present invention can be applied.

FIG. 2 illustrates the configurations of a control plane and a user plane of a radio interface protocol between the E-UTRAN and a UE in the wireless communication system to which the present invention can be applied.

FIG. 3 illustrates physical channels and a view showing physical channels used for in the 3GPP LTE/LTE-A system to which the present invention can be applied.

FIG. 4 is a diagram showing the structure of a radio frame used in a 3GPP LTE system to which the present invention can be applied.

FIG. 5 shows an example of a resource grid for one downlink slot in the wireless communication system to which the present invention can be applied.

FIG. 6 shows a structure of a downlink subframe in the wireless communication system to which the present invention can be applied.

FIG. 7 shows a structure of an uplink subframe in the wireless communication system to which the present invention can be applied.

FIG. 8 illustrates a structure of DCI format 0 in the wireless communication system to which the present invention can be applied.

FIG. 9 illustrates an example of a formation that PUCCH formats are mapped to the PUCCH regions of the UL physical resource blocks in the wireless communication system to which the present application can be applied.

FIG. 10 shows a structure of CQI channel in case of a normal CP in the wireless communication system to which the present invention can be applied.

FIG. 11 shows a structure of ACK/NACK in case of a normal CP in the wireless communication system to which the present invention can be applied.

FIG. 12 illustrates a method for multiplexing the ACK/NACK and the SR in the wireless communication system to which the present invention can be applied.

FIG. 13 illustrates the MAC PDU used in the MAC entity in the wireless communication system to which the present invention can be applied.

FIG. 14 and FIG. 15 illustrate the sub-header of the MAC PDU in the wireless communication system to which the present invention can be applied.

FIG. 16 illustrates formats of the MAC control elements in order to report the buffer state in the wireless communication system to which the present invention can be applied.

FIG. 17 represents an example of component carrier and carrier aggregation in the wireless communication system to which the present invention can be applied.

FIG. 18 illustrates a UL resource allocation procedure of a UE in the wireless communication system to which the present application can be applied.

FIG. 19 is a diagram for describing a latency in C-plane required in 3GPP LTE-A to which the present invention can be applied.

FIG. 20 is a diagram for describing a transition time from the dormant state to the active state for a synchronized UE required in 3GPP LTE-A to which the present invention can be applied.

FIG. 21 illustrates one example of a random access procedure in an LTE system.

FIG. 22 is a diagram illustrating a random access response reception window size of a UE supporting an sTTI proposed by this specification and a size of a random access response reception window of an existing legacy UE terminal.

FIG. 23 is a diagram illustrating an operation of a UE for quickly performing an initial access proposed by this specification.

FIG. 24 is a diagram illustrating an operation of an eNB for quickly performing an initial access proposed by this specification.

FIG. 25 illustrates a block diagram of a wireless communication device to which methods proposed by this specification may be applied.

FIG. 26 illustrates a block diagram of a wireless communication device to which methods proposed by this specification may be applied.

[Mode for Invention]

Reference will now be made in detail to the preferred embodiments of the present invention, examples of which are illustrated in the accompanying drawings. The detailed description set forth below in connection with the appended drawings is a description of exemplary embodiments and is not intended to represent the only embodiments through which the concepts explained in these embodiments can be practiced. The detailed description includes details for the purpose of providing an understanding of the present invention. However, it will be apparent to those skilled in the art that these teachings may be implemented and practiced without these specific details.

In some instances, known structures and devices are omitted, or are shown in block diagram form focusing on important features of the structures and devices, so as not to obscure the concept of the present invention.

In the embodiments of the present invention, the enhanced Node B (eNode B or eNB) may be a terminal node of a network, which directly communicates with the terminal. In some cases, a specific operation described as performed by the eNB may be performed by an upper node of the eNB. Namely, it is apparent that, in a network comprised of a plurality of network nodes including an eNB, various operations performed for communication with a terminal may be performed by the eNB, or network nodes other than the eNB. The term 'eNB' may be replaced with the term 'fixed station', 'base station (BS)', 'Node B', 'base transceiver system (BTS),', 'access point (AP)', etc. The term 'user equipment (UE)' may be replaced with the term 'terminal', 'mobile station (MS)', 'user terminal (UT)', 'mobile subscriber station (MSS)', 'subscriber station (SS)', Advanced Mobile Station (AMS)', 'Wireless terminal (WT)', Machine-Type Communication (MTC) device', 'Machine-to-Machine (M2M) device', 'Device-to-Device(D2D) device', wireless device, etc.

In the embodiments of the present invention, "downlink (DL)" refers to communication from the eNB to the UE, and "uplink (UL)" refers to communication from the UE to the eNB. In the downlink, transmitter may be a part of eNB, and receiver may be part of UE. In the uplink, transmitter may be a part of UE, and receiver may be part of eNB.

Specific terms used for the embodiments of the present invention are provided to aid in understanding of the present invention. These specific terms may be replaced with other terms within the scope and spirit of the present invention.

The embodiments of the present invention can be supported by standard documents disclosed for at least one of wireless access systems, Institute of Electrical and Electronics Engineers (IEEE) 802, 3rd Generation Partnership Project (3GPP), 3GPP Long Term Evolution (3GPP LTE), LTE-Advanced (LTE-A), and 3GPP2. Steps or parts that are not described to clarify the technical features of the present invention can be supported by those documents. Further, all terms as set forth herein can be explained by the standard documents.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier-Frequency Division Multiple Access (SC-FDMA), 'non-orthogonal multiple access (NOMA)', etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE).

OFDMA may be implemented as a radio technology such as IEEE 802.11 (Wi-Fi), IEEE 802.16 (WiMAX), IEEE 802.20, Evolved-UTRA (E-UTRA) etc. UTRA is a part of Universal Mobile Telecommunication System (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

For clarity, this application focuses on the 3GPP LTE/LTE-A system. However, the technical features of the present invention are not limited thereto.

## General system to which the present invention may be applied

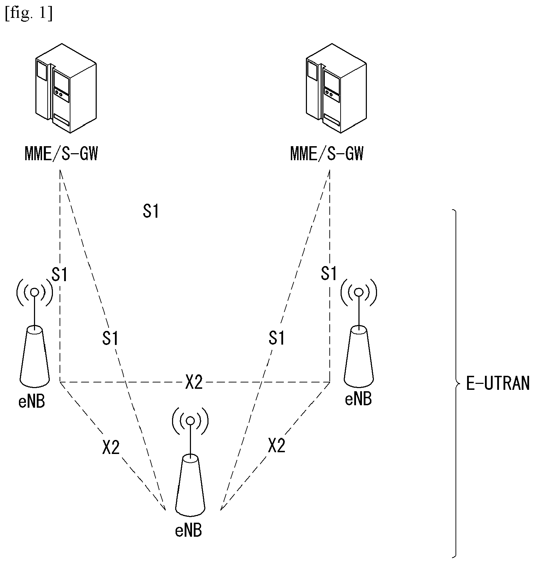

FIG. 1 illustrates a schematic structure a network structure of an evolved universal mobile telecommunication system (E-UMTS) to which the present invention can be applied.

An E-UMTS system is an evolved version of the UMTS system. For example, the E-UMTS may be also referred to as an LTE/LTE-A system. The E-UMTS is also referred to as a Long Term Evolution (LTE) system.

The E-UTRAN consists of eNBs, providing the E-UTRA user plane and control plane protocol terminations towards the UE. The eNBs are interconnected with each other by means of the X2 interface. The X2 user plane interface (X2-U) is defined between eNBs. The X2-U interface provides non guaranteed delivery of user plane packet data units (PDUs). The X2 control plane interface (X2-CP) is defined between two neighbour eNBs. The X2-CP performs following functions: context transfer between eNBs, control of user plane tunnels between source eNB and target eNB, transfer of handover related messages, uplink load management and the like. Each eNB is connected to User Equipments (UEs) through a radio interface and is connected to an Evolved Packet Core (EPC) through an S1 interface. The S1 user plane interface (S1-U) is defined between the eNB and the serving gateway (S-GW). The S1-U interface provides non guaranteed delivery of user plane PDUs between the eNB and the S-GW. The S1 control plane interface (S1-MME) is defined between the eNB and the MME (Mobility Management Entity). The S1 interface performs following functions: EPS (Enhanced Packet System) Bearer Service Management function, NAS (Non-Access Stratum) Signaling Transport function, Network Sharing Function, MME Load balancing Function and the like. The S1 interface supports a many-to-many relation between MMEs / S-GWs and eNBs.

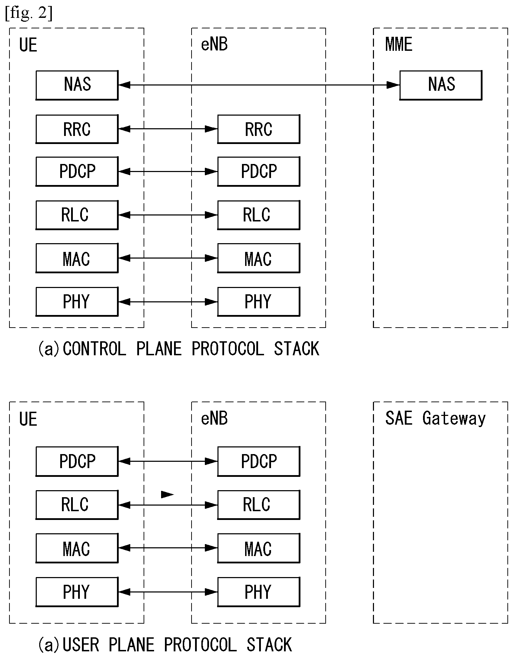

FIG. 2 illustrates the configurations of a control plane and a user plane of a radio interface protocol between the E-UTRAN and a UE in the wireless communication system to which the present invention can be applied.

FIG. 2(a) shows the respective layers of the radio protocol control plane, and FIG. 2(b) shows the respective layers of the radio protocol user plane.

Referring to the FIG. 2, the protocol layers of a radio interface protocol between the E-UTRAN and a UE can be divided into an L1 layer (first layer), an L2 layer (second layer), and an L3 layer (third layer) based on the lower three layers of the Open System Interconnection (OSI) reference model widely known in communication systems. The radio interface protocol is divided horizontally into a physical layer, a data link layer, and a network layer, and vertically into a user plane for data transmission and a control plane for signaling.

The control plane is a passage through which control messages that a UE and a network use in order to manage calls are transmitted. The user plane is a passage through which data (e.g., voice data or Internet packet data) generated at an application layer is transmitted. The following is a detailed description of the layers of the control and user planes in a radio interface protocol.

The control plane is a passage through which control messages that a UE and a network use in order to manage calls are transmitted. The user plane is a passage through which data (e.g., voice data or Internet packet data) generated at an application layer is transmitted. The following is a detailed description of the layers of the control and user planes in a radio interface protocol.

The MAC layer of the second layer provides a service to a Radio Link Control (RLC) layer, located above the MAC layer, through a logical channel. The MAC layer plays a role in mapping various logical channels to various transport channels. And, the MAC layer also plays a role as logical channel multiplexing in mapping several logical channels to one transport channel.

The RLC layer of the second layer supports reliable data transmission. The RLC layer performs segmentation and concatenation on data received from an upper layer to play a role in adjusting a size of the data to be suitable for a lower layer to transfer the data to a radio section. And, the RLC layer provides three kinds of RLC modes including a transparent mode (TM), an unacknowledged mode (UM) and an acknowledged mode (AM) to secure various kinds of QoS demanded by each radio bearer (RB). In particular, the AM RLC performs a retransmission function through automatic repeat and request (ARQ) for the reliable data transfer. The functions of the RLC layer may also be implemented through internal functional blocks of the MAC layer. In this case, the RLC layer need not be present.

A packet data convergence protocol (PDCP) layer of the second layer performs a header compression function for reducing a size of an IP packet header containing relatively large and unnecessary control information to efficiently transmit such an IP packet as IPv4 and IPv6 in a radio section having a small bandwidth. This enables a header part of data to carry mandatory information only to play a role in increasing transmission efficiency of the radio section. Moreover, in the LTE/LTE-A system, the PDCP layer performs a security function as well. This consists of ciphering for preventing data interception conducted by a third party and integrity protection for preventing data manipulation conducted by a third party.

A Radio Resource Control (RRC) layer located at the bottom of the third layer is defined only in the control plane and is responsible for control of logical, transport, and physical channels in association with configuration, re-configuration, and release of Radio Bearers (RBs). The RB is a logical path that the second layer provides for data communication between the UE and the E-UTRAN. To accomplish this, the RRC layer of the UE and the RRC layer of the network exchange RRC messages. To Configure of Radio Bearers means that the radio protocol layer and the characteristic of channels are defined for certain service and that each of specific parameters and operating method are configured for certain service. The radio bearer can be divided signaling radio bearer (SRB) and data radio bearer (DRB). The SRB is used as a path for transmission RRC messages in the control plane, and the DRB is used as a path for transmission user data in the user plane.

A Non-Access Stratum (NAS) layer located above the RRC layer performs functions such as session management and mobility management.

One cell of the eNB is set to use a bandwidth such as 1.25, 2.5, 5, 10 or 20MHz to provide a downlink or uplink transmission service to UEs. Here, different cells may be set to use different bandwidths.

Downlink transport channels for transmission of data from the network to the UE include a Broadcast Channel (BCH) for transmission of system information, a Paging Channel (PCH) for transmission of paging messages, and a downlink Shared Channel (DL-SCH) for transmission of user traffic or control messages. User traffic or control messages of a downlink multicast or broadcast service may be transmitted through DL-SCH and may also be transmitted through a downlink multicast channel (MCH). Uplink transport channels for transmission of data from the UE to the network include a Random Access Channel (RACH) for transmission of initial control messages and an uplink SCH (UL-SCH) for transmission of user traffic or control messages.

Logical channels, which are located above the transport channels and are mapped to the transport channels, include a Broadcast Control Channel (BCCH), a Paging Control Channel (PCCH), a Common Control Channel (CCCH), a dedicated control channel (DCCH), a Multicast Control Channel (MCCH), a dedicated traffic channel (DTCH), and a Multicast Traffic Channel (MTCH).

As an downlink physical channel for transmitting information forwarded on an downlink transport channel to a radio section between a network and a user equipment, there is a physical downlink shared channel (PDSCH) for transmitting information of DL-SCH, a physical control format indicator channel (PDFICH) for indicating the number of OFDM symbols used for transmitting a physical downlink control channel (PDCCH), a physical HARQ (hybrid automatic repeat request) indicator channel (PHICH) for transmitting HARQ ACK (Acknowledge) / NACK (Non-acknowledge) as response to UL transmission or a PDCCH for transmitting such control information, as DL grant indicating resource allocation for transmitting a Paging Channel (PCH) and DL-SCH, information related to HARQ, UL grant indicating resource allocation for transmitting a UL-SCH and like that. As an uplink physical channel for transmitting information forwarded on an uplink transport channel to a radio section between a network and a user equipment, there is a physical uplink shared channel (PUSCH) for transmitting information of UL-SCH, a physical random access channel (PRACH) for transmitting RACH information or a physical uplink control channel (PUCCH) for transmitting such control information, which is provided by first and second layers, as HARQ ACK/NACK (Non-acknowledge), scheduling request (SR), channel quality indicator (CQI) report and the like.

The NAS state model is based on a two-dimensional model which consists of EPS Mobility Management (EMM) states and of EPS Connection Management (ECM) states. The EMM states describe the mobility management states that result from the mobility management procedures e.g., Attach and Tracking Area Update procedures. The ECM states describe the signaling connectivity between the UE and the EPC.

In detail, in order to manage mobility of a UE in NAS layers positioned in control planes of the UE and an MME, an EPS mobility management REGISTERED (EMM-REGISTERED) state and an EMM-DEREGISTERED state may be defined. The EMM-REGISTERED state and the EMM-DEREGISTERED state may be applied to the UE and the MME.

The UE is in the EMM deregistered state, like a state in which power of the UE is first turned on, and in order for the UE to access a network, a process of registering in the corresponding network is performed through an initial access procedure. When the access procedure is successfully performed, the UE and the MME transition to an EMM-REGISTERED state.

Also, in order to manage signaling connection between the UE and the network, an EPS connection management CONNECTED (ECM-CONNECTED) state and an ECM-IDLE state may be defined. The ECM-CONNECTED state and the ECM-IDLE state may also be applied to the UE and the MME. The ECM connection may include an RRC connection established between the UE and a BS and an S1 signaling connection established between the BS and the MME. The RRC state indicates whether an RRC layer of the UE and an RRC layer of the BS are logically connected. That is, when the RRC layer of the UE and the RRC layer of the BS are connected, the UE may be in an RRC_CONNECTED state. When the RRC layer of the UE and the RRC layer of the BS are not connected, the UE in an RRC_IDLE state.

Here, the ECM and EMM states are independent of each other and when the UE is in EMM-REGISTERED state this does not imply that the user plane (radio and S1 bearers) is established

In E-UTRAN RRC_CONNECTED state, network-controlled UE-assisted handovers are performed and various DRX cycles are supported. In E-UTRAN RRC_IDLE state, cell reselections are performed and DRX is supported.

The network may recognize the presence of the UE in the ECM-CONNECTED state by the cell and effectively control the UE. That is, when the UE is in the ECM-CONNECTED state, mobility of the UE is managed by a command from the network. In the ECM-CONNECTED state, the network knows about a cell to which the UE belongs. Thus, the network may transmit and/or receive data to or from the UE, control mobility such as handover of the UE, and perform cell measurement on a neighbor cell.

Meanwhile, the network cannot recognize the presence of the UE in the ECM-idle state and a core network (CN) manages the UE by the tracking area, a unit greater than cell. When the UE is in the ECM-idle state, the UE performs discontinuous reception (DRX) set by the NAS using an ID uniquely assigned in a tracking region. That is, the UE may monitor a paging signal at a particular paging opportunity in every UE-specific paging DRX cycle to receive broadcast of system information and paging information. Also, when the UE is in the ECM-idle state, the network does not have context information of the UE.

Thus, the UE in the ECM-idle state may perform a UE-based mobility-related procedure such as cell selection or cell reselection without having to receive a command from the network. When a location of the UE in the ECM-idle state is changed from that known by the network, the UE may inform the network about a location thereof through a tracking area update (TAU) procedure.

As described above, in order for the UE to receive a general mobile communication service such as voice or data, the UE needs to transition to an ECM-CONNECTED state. The UE is in the ECM-IDLE state like the case in which power of the UE is first turned on. When the UE is successfully registered in the corresponding network through an initial attach procedure, the UE and the MME transition to an ECM-CONNECTED state. Also, in a case in which the UE is registered in the network but traffic is deactivated so radio resource is not allocated, the UE is in an ECM-IDLE state, and when uplink or downlink new traffic is generated in the corresponding UE, the UE and the MME transition to an ECM-CONNECTED state through a service request procedure.

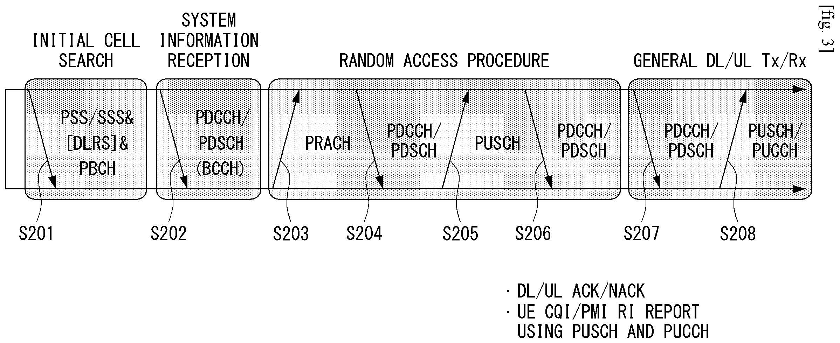

FIG. 3 illustrates physical channels and a view showing physical channels used for in the 3GPP LTE/LTE-A system to which the present invention can be applied.

When a UE is powered on or when the UE newly enters a cell, the UE performs an initial cell search operation such as synchronization with a BS in step S301. For the initial cell search operation, the UE may receive a Primary Synchronization Channel (P-SCH) and a Secondary Synchronization Channel (S-SCH) from the BS so as to perform synchronization with the BS, and acquire information such as a cell ID.

Thereafter, the UE may receive a physical broadcast channel (PBCH) from the BS and acquire broadcast information in the cell. Meanwhile, the UE may receive a Downlink Reference signal (DL RS) in the initial cell search step and confirm a downlink channel state.

The UE which completes the initial cell search may receive a Physical Downlink Control Channel (PDCCH) and a Physical Downlink Shared Channel (PDSCH) corresponding to the PDCCH, and acquire more detailed system information in step S302.

Thereafter, the UE may perform a random access procedure in steps S303 to S306, in order to complete the access to the BS. For the random access procedure, the UE may transmit a preamble via a Physical Random Access Channel (PRACH) (S303), and may receive a message in response to the preamble via the PDCCH and the PDSCH corresponding thereto (S304). In contention-based random access, a contention resolution procedure including the transmission of an additional PRACH (S305) and the reception of the PDCCH and the PDSCH corresponding thereto (S306) may be performed.

The UE which performs the above-described procedure may then receive the PDCCH/PDSCH (S307) and transmit a Physical Uplink Shared Channel (PUSCH)/Physical Uplink Control Channel (PUCCH) (S308), as a general uplink/downlink signal transmission procedure.

Control information transmitted from the UE to the BS is collectively referred to as uplink control information (UCI). The UCI includes hybrid automatic repeat and request acknowledgement/negative-acknowledgement (HARQ ACK/NACK), scheduling request (SR), channel quality information (CQI), precoding matrix indicator (PMI), rank indication (RI), etc. In the embodiments of the present invention, CQI and/or PMI are also referred to as channel quality control information.

In general, although a UCI is periodically transmitted via a PUCCH in the LTE system, this may be transmitted through a PUSCH if control information and traffic data are simultaneously transmitted. In addition, a UCI may be aperiodically transmitted via a PUSCH according to a network request/instruction.

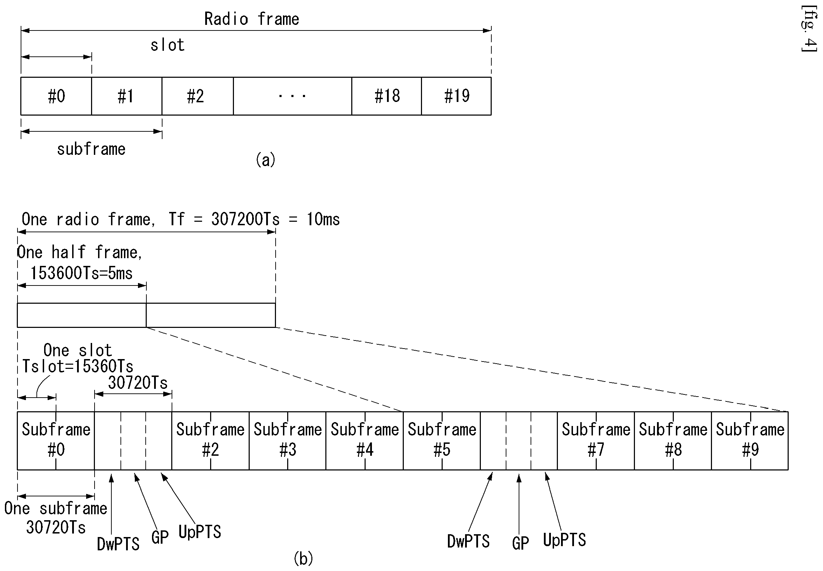

FIG. 4 is a diagram showing the structure of a radio frame used in a 3GPP LTE system to which the present invention can be applied.

In a cellular OFDM radio packet communication system, uplink/downlink data packet transmission is performed in subframe units and one subframe is defined as a predetermined duration including a plurality of OFDM symbols. The 3GPP LTE standard supports a type-1 radio frame structure applicable to frequency division duplex (FDD) and a type-2 radio frame structure applicable to time division duplex (TDD). According to the FDD scheme, the UL transmission and the DL transmission are performed by occupying different frequency bandwidths. According to the TDD scheme, the UL transmission and the DL transmission are performed on respective times different from each other while occupying the same frequency bandwidth. The channel response in the TDD scheme is substantially reciprocal. This signifies that the DL channel response and the UL channel response are about the same in a given frequency domain. Accordingly, there is a merit that the DL channel response can be obtained from the UL channel response in wireless communication systems based on the TDD. In the TDD scheme, since entire frequency bandwidth is timely divided in the UL transmission and the DL transmission, the DL transmission by an eNB and the UL transmission by a UE may not be performed simultaneously. In the TDD system in which the UL transmission and the DL transmission are distinguished by a unit of subframe, the UL transmission and the DL transmission are performed in different subframes.

FIG. 4(a) shows the structure of the type-1 radio frame. A downlink radio frame includes 10 subframes and one subframe includes two slots in a time domain. A time required to transmit one subframe is referred to as a transmission time interval (TTI). For example, one subframe has a length of 1 ms and one slot has a length of 0. 5 ms. One slot includes a plurality of OFDM symbols in a time domain and includes a plurality of resource blocks (RBs) in a frequency domain. In the 3GPP LTE system, since OFDMA is used in the downlink, an OFDM symbol indicates one symbol period. The OFDM symbol may be referred to as an SC-FDMA symbol or symbol period. A RB as a resource allocation unit may include a plurality of consecutive subcarriers in one slot.

The number of OFDM symbols included in one slot may be changed according to the configuration of cyclic prefix (CP). CP includes an extended CP and a normal CP. For example, if OFDM symbols are configured by the normal CP, the number of OFDM symbols included in one slot may be 7. If OFDM symbols are configured by the extended CP, since the length of one OFDM symbol is increased, the number of OFDM symbols included in one slot is less than the number of OFDM symbols in case of the normal CP. In case of the extended CP, for example, the number of OFDM symbols included in one slot may be 6. In the case where a channel state is unstable, such as the case where a UE moves at a high speed, the extended CP may be used in order to further reduce inter-symbol interference.

In case of using the normal CP, since one slot includes seven OFDM symbols, one subframe includes 14 OFDM symbols. At this time, a maximum of three first OFDM symbols of each subframe may be allocated to a physical downlink control channel (PDCCH) and the remaining OFDM symbols may be allocated to a physical downlink shared channel (PDSCH).

FIG. 4(b) shows the structure of the type-2 radio frame. The type-2 radio frame includes two half frames and each half frame includes five subframes, a downlink pilot time slot (DwPTS), a guard period (GP) and an uplink pilot time slot (UpPTS). From among these, one subframe includes two slots. The DwPTS is used for initial cell search, synchronization or channel estimation of a UE. The UpPTS is used for channel estimation of a BS and uplink transmission synchronization of a UE. The GP is used to eliminate interference generated in the uplink due to multi-path delay of a downlink signal between the uplink and the downlink.

The structure of the radio frame is only exemplary and the number of subframes included in the radio frame, the number of slots included in the subframe, or the number of symbols included in the slot may be variously changed.

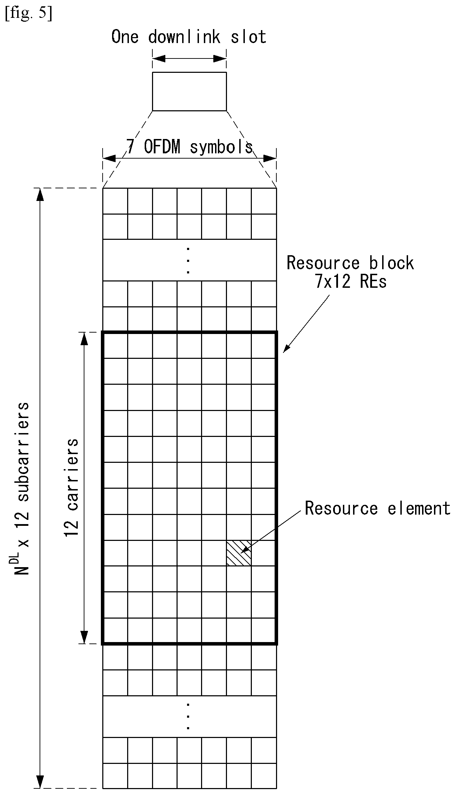

FIG. 5 shows an example of a resource grid for one downlink slot in the wireless communication system to which the present invention can be applied.

Referring to the FIG. 5, the downlink slot includes a plurality of OFDM symbols in a time domain. It is described herein that one downlink slot includes 7 OFDMA symbols and one resource block includes 12 subcarriers for exemplary purposes only, and the present invention is not limited thereto.

Each element on the resource grid is referred to as a resource element, and one resource block includes $12 \times 7$ resource elements. The resource element on the resource grid may be identified by an index pair (k, I) in the slot. Here, k (k=0, ..., NRBx12-1) denotes an index of subcarrier in the frequency domain, and I(l=0,...,6) denotes an index of symbol in the time domain. The number NDL of resource blocks included in the downlink slot depends on a downlink transmission bandwidth determined in a cell.

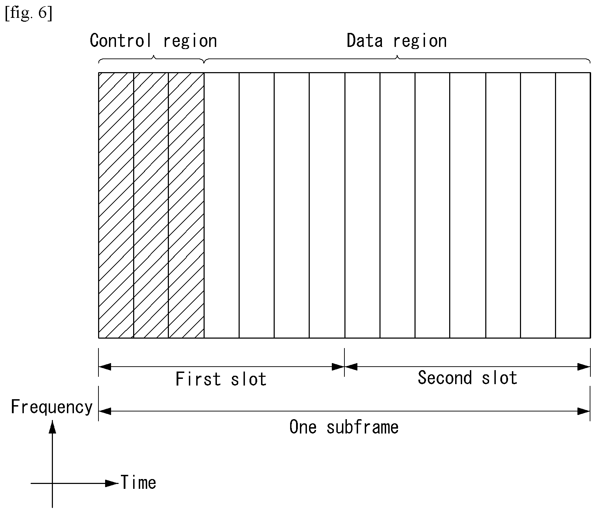

FIG. 6 shows a structure of a downlink subframe in the wireless communication system to which the present invention can be applied.

Referring to the FIG. 6, a maximum of three OFDM symbols located in a front portion of a first slot in a subframe correspond to a control region to be assigned with control channels. The remaining OFDM symbols correspond to a data region to be assigned with physical downlink shared channels (PDSCHs).

Examples of downlink control channels used in the 3GPP LTE include a physical control format indicator channel (PCFICH), a physical downlink control channel (PDCCH), a physical hybrid-ARQ indicator channel (PHICH), etc. The PCFICH transmitted in a 1st OFDM symbol of a subframe carries information regarding the number of OFDM symbols (i.e., a size of a control region) used for transmission of control channels in the subframe. Control information transmitted over the PDCCH is referred to as downlink control information (DCI). The DCI transmits uplink resource assignment information, downlink resource assignment information, an uplink transmit power control (TPC) command for any UE groups, etc. The PHICH carries an acknowledgement (ACK)/not-acknowledgement (NACK) signal for an uplink hybrid automatic repeat request (HARQ). That is, the ACK/NACK signal for uplink data transmitted by a UE is transmitted over the PHICH.

A BS determines a PDCCH format according to DCI to be transmitted to a UE, and attaches a cyclic redundancy check (CRC) to control information. The CRC is masked with a unique identifier (referred to as a radio network temporary identifier (RNTI)) according to an owner or usage of the PDCCH. If the PDCCH is for a specific UE, a unique identifier (e.g., cell-RNTI (C-RNTI)) of the UE may be masked to the CRC. Alternatively, if the PDCCH is for a paging message, a paging indication identifier (e.g., paging-RNTI (P-RNTI)) may be masked to the CRC. If the PDCCH is for system information, a system information identifier (e.g., system information-RNTI (SI-RNTI)) may be masked to the CRC. To indicate a random access response that is a response for transmission of a random access preamble of the UE, a random access-RNTI (RA-RNTI) may be masked to the CRC.

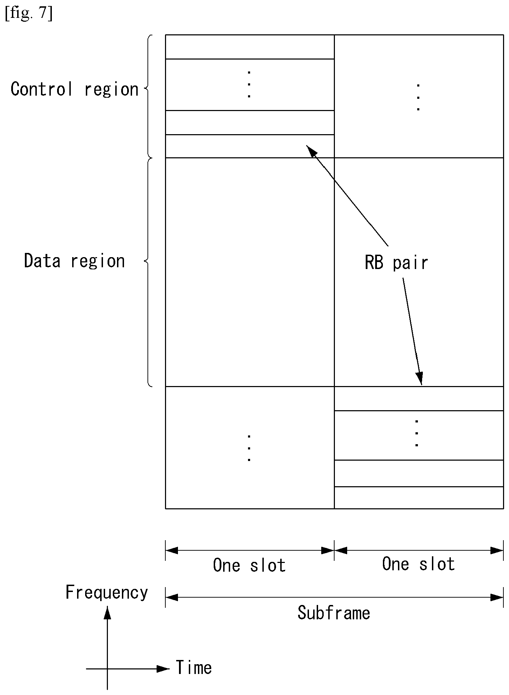

FIG. 7 shows a structure of an uplink subframe in the wireless communication system to which the present invention can be applied.

Referring to the FIG. 7, the uplink subframe can be divided in a frequency domain into a control region and a data region. The control region is allocated with a physical uplink control channel (PUCCH) for carrying uplink control information. The data region is allocated with a physical uplink shared channel (PUSCH) for carrying user data. In case of being indicated from higher layer, UE can simultaneously transmit the PUCCH and the PUSCH.

The PUCCH for one UE is allocated to an RB pair in a subframe. RBs belonging to the RB pair occupy different subcarriers in respective two slots. This is called that the RB pair allocated to the PUCCH is frequency-hopped in a slot boundary.

## Physical downlink control channel (PDCCH)

The control information transmitted through the PDCCH is referred to as a downlink control indicator (DCI). In the PDCCH, a size and use of the control information are different according to a DCI format. In addition, a size of the control information may be changed according to a coding rate.

Table 1 represents the DCI according to the DCI format.

[Table 1]

| DCI format | Objectives |
|---|---|
| 0 | Scheduling of PUSCH |
| 1 | Scheduling of one PDSCH codeword |
| 1A | Compact scheduling of one PDSCH codeword |
| 1B | Closed-loop single-rank transmission |
| 1C | Paging, RACH response and dynamic BCCH |
| 1D | MU-MIMO |
| 2 | Scheduling of rank-adapted closed-loop spatial multiplexing mode |
| 2A | Scheduling of rank-adapted open-loop spatial multiplexing mode |
| 3 | TPC commands for PUCCH and PUSCH with 2bit power adjustments |
| 3A | TPC commands for PUCCH and PUSCH with single bit power adjustments |
| 4 | the scheduling of PUSCH in one UL cell with multi-antenna port transmission mode |

Referring to Table 1, the DCI format includes format 0 for the PUSCH scheduling, format 1 for scheduling of one PDSCH codeword, format 1A for compact scheduling of one PDSCH codeword, format 1C for very compact scheduling of the DL-SCH, format 2 for PDSCH scheduling in a closed-loop spatial multiplexing mode, format 2A for PDSCH scheduling in an open-loop spatial multiplexing mode, formats 3 and 3A for transmitting a transmission power control (TPC) command for a UL channel, and format 4 for PUSCH scheduling within one UL cell in a multiple antenna port transmission mode.

DCI format 1A may be used for PDSCH scheduling whichever transmission mode is configured to a UE.

Such DCI formats may be independently applied to each UE, and the PDCCHs of several UEs may be simultaneously multiplexed in one subframe. The PDCCH is comprised of an aggregation of one or a few continuous control channel elements (CCEs). The CCE is a logical allocation unit used for providing a coding rate according to a state of radio channel to the PDCCH. The CCE is referred to as a unit that corresponds to nine sets of resource element group (REG) which is comprised of four resource elements. An eNB may use {1, 2, 4, 8} CCEs for constructing one PDCCH signal, and this {1, 2, 4, 8} is called a CCE aggregation level. The number of CCE used for transmitting a specific PDCCH is determined by the eNB according to the channel state. The PDCCH configured according to each UE is mapped with being interleaved to a control channel region of each subframe by a CCE-to-RE mapping rule. A location of the PDCCH may be changed according to the number of OFDM symbols for the control channel, the number of PHICH group, a transmission antenna, a frequency shift, etc.

As described above, a channel coding is independently performed for the PDCCH of each multiplexed UE, and the cyclic redundancy check (CRC) is applied. By masking each UE ID to CRC, the UE may receive its PDCCH. However, in the control region allocated in a subframe, the eNB does not provide information on where the PDCCH that corresponds to the UE is. Since the UE is unable to know on which position its PDCCH is transmitted with which CCE aggregation level and DCI format in order to receive the control channel transmitted from the eNB, the UE finds its own PDCCH by monitoring a set of PDCCH candidates in a subframe. This is called a blind decoding (BD). The blind decoding may also be called a blind detection or a blind search. The blind decoding signifies a method of verifying whether the corresponding PDCCH is its control channel by checking CRC errors, after the UE de-masks its UE ID in CRC part.

Hereinafter, the information transmitted through DCI format 0 will be described.

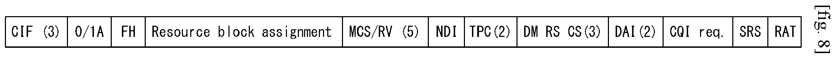

FIG. 8 illustrates a structure of DCI format 0 in the wireless communication system to which the present invention can be applied.

DCI format 0 is used for scheduling the PUSCH in one UL cell.

Table 2 represents information transmitted via DCI format 0.

[Table 2]

| Format 0 (Release 8) | Format 0 (Release 10) |
|---|---|
| | Carrier Indicator (CIF) |
| Flag for format 0/format 1A differentiation | Flag for format 0/format 1A differentiation |
| Hopping flag (FH) | Hopping flag (FH) |
| Resource block assignment (RIV) | Resource block assignment (RIV) |
| MCS and RV | MCS and RV |
| NDI (New Data Indicator) | NDI (New Data Indicator) |
| TPC for PUSCH | TPC for PUSCH |
| Cyclic shift for DM RS | Cyclic shift for DM RS |
| UL index (TDD only) | UL index (TDD only) |
| Downlink Assignment Index (DAI) | Downlink Assignment Index (DAI) |
| CSI request (1 bit) | CSI request (1 or 2 bits: 2 bit is for multi carrier) |
| | SRS request |
| | Resource allocation type (RAT) |

Referring to FIG. 8 and Table 2, the information transmitted via DCI format 0 is as follows.

1) Carrier indicator - Includes 0 or 3 bits.

2) Flag for DCI format 0/1A differentiation - Includes 1 bit, a value of 0 indicates DCI format 0 and a value of 1 indicates DCI format 1A.

3) Frequency hopping flag - Includes 1 bit. In this field, a most significant bit (MSB) of resource allocation may be used for multi-cluster allocation.

4) Resource block assignment and hopping resource assignment - Includes $\left\lceil \log_2 (N_{RB}^{DL} (N_{RB}^{DL} + 1) / 2) \right\rceil$ bits. Herein, in case of PUSCH hopping in single-cluster allocation, in order to acquire a value of $\tilde{n}_{PRB}(i)$ NUL_hop MSBs are used. $\left( \left\lceil \log_2 (N_{RB}^{UL} (N_{RB}^{UL} + 1) / 2) \right\rceil - N_{UL\_hop} \right)$ bits provide resource allocation of a first slot within an uplink subframe. In addition, if PUSCH hopping is not present in single-cluster allocation, $\left(\left\lceil \log_2(N_{RB}^{UL}(N_{RB}^{UL}+1)/2)\right\rceil\right)$ bits provide resource allocation within an uplink subframe. In addition, if PUSCH hopping is not present in multi-cluster allocation, resource allocation information is obtained from concatenation between the frequency hopping flag field and resource block assignment and hopping resource assignment field and $\left\lceil \log_2\left(\left(\left\lceil \dfrac{\lceil N_{RB}^{UL} / P + 1 \rceil}{4}\right\rceil\right)\right)\right\rceil$ bits provide resource allocation within an uplink subframe. At this time, the P value is determined by the number of downlink resource blocks.

5) Modulation and coding scheme (MCS) - Includes 5 bits.

6) New data indicator - Includes 1 bit.

7) Transmit power control (TPC) command for PUSCH - Includes 2 bits.

8) Index of orthogonal cover/orthogonal cover code (OC/OCC) and cyclic shift for demodulation reference signal (DMRS) - Includes 3 bits.

9) Uplink Index - Includes 2 bits. This field is present only in TDD operation according to uplink-downlink configuration 0.

10) Downlink assignment index (DAI) - Includes 2 bits. This field is present only in TDD operation according to uplink-downlink configurations 1 to 6.

11) Channel state information (CSI) request - Includes 1 or 2 bits. Herein, a 2-bit field is only applied to the case in which the DCI is mapped to the UE, for which one or more downlink cells are configured, by the C-RNTI in a UE-specific manner.

12) Sounding reference signal (SRS) request - Includes 0 or 1 bit. This field is present only in the case in which a scheduled PUSCH is mapped in a UE-specific manner by the C-RNTI.

13) Multi-cluster flag - Includes 1 bit.

If the number of information bits in DCI format 0 is less than the payload size (including added padding bits) of DCI format 1A, 0 is appended to DCI format 0 such that the number of information bits becomes equal to the payload size of DCI format 1A.

PUCCH(Physical Uplink Control Channel)

The PUCCH carries various sorts of uplink control information (UCI) according to format as follows.

- SR (Scheduling Request): This is information used for requesting the UL-SCH resource. This information is transmitted using an on-off keying (OOK) method.
- HARQ ACK/NACK: This is a response signal for DL data packet on a PDSCH. This information represents whether the DL data packet is successfully received. One bit of ACK/NACK is transmitted in response to a single DL codeword and two bits of ACK/NACK are transmitted in response to two DL codewords.
- CSI (Channel State Information): This is feedback information for a DL channel. The CSI may include at least one of a channel quality indicator (CQI), a rank indicator (RI), a precoding matrix indicator (PMI) and a precoding type indicator (PTI). Hereinafter, this will be referred to 'CQI' as a common term for the convenience of description.

The PUCCH may be modulated by using a binary phase shift keying (BPSK) technique and a quadrature phase shift keying (QPSK) technique. Control information for a plurality of UEs may be transmitted through the PDCCH. In case of performing code division multiplexing (CDM) to distinguish signal of each of the UEs, constant amplitude zero autocorrelation (CAZAC) sequence is mostly used. Since the CAZAC sequence has characteristics of maintaining a fixed amplitude in a time domain and a frequency domain, the CAZAC has characteristics proper to increase coverage by lowering a peak-to-average power ratio (PAPR) or a cubic metric (CM) of a UE. In addition, the ACK/NACK information for DL data transmission transmitted through the PDCCH is covered by using an orthogonal sequence or an orthogonal cover (OC).

Additionally, control information transmitted on the PUCCH may be distinguished by using a cyclically shifted sequence that has different cyclic shift (CS) values. The cyclically shifted sequence may be generated by shifting cyclically a base sequence by as much as a predetermined cyclic shift amount. The cyclic shift amount is indicated by a CS index. The number of available cyclic shift may be changed according to delay spread of a channel. Various sorts of sequence may be used as the basic sequence, and the CAZAC sequence described above is an example.

In addition, the quantity of control information that can be transmitted by a UE in a subframe may be determined depending on the number of SC-FDMA symbols (i.e., signifies SC-FDMA symbols other than SC-FDMA symbols used for reference signal (RS) transmission for detecting coherent detection of the PUCCH, but except for the last SC-FDMA symbol in a subframe in which a sounding reference signal (SRS) is configured).

The PUCCH may be defined by seven sorts of different formats depending on the control information, a modulation technique, a quantity of the control information, etc. which is transmitted, and the property of uplink control information (UCI) transmitted according to each of the PUCCH formats may be summarized as Table 1 below.

[Table 3]

| PUCCH Format | Uplink Control Information(UCI) |
|---|---|
| Format 1 | Scheduling Request (SR) (unmodulated waveform) |
| Format 1a | 1-bit HARQ ACK/NACK with/without SR |
| Format 1b | 2-bit HARQ ACK/NACK with/without SR |
| Format 2 | CQI (20 coded bits) |
| Format 2 | CQI and 1- or 2-bit HARQ ACK/NACK (20 bits) for extended CP only |
| Format 2a | CQI and 1-bit HARQ ACK/NACK (20+1 coded bits) |
| Format 2b | CQI and 2-bit HARQ ACK/NACK (20+2 coded bits) |
| Format 3 | HARQ ACK/NACK, SR, CSI (48 coded bits) |

Referring to Table 3, PUCCH format 1 is used for a single transmission of a scheduling request (SR). Wave forms which are not modulated are applied to the single transmission of SR, and this will be described below in detail.

PUCCH format 1a or 1b is used for transmitting HARQ acknowledgement/non-acknowledgement (ACK/NACK). When the HARQ ACK/NACK is solely transmitted in an arbitrary subframe, PUCCH format 1a or 1b may be used. Or, the HARQ ACK/NACK and the SR may be transmitted in a same subframe by using PUCCH format 1a or 1b.

PUCCH format 2 is used for transmitting the CQI, and PUCCH format 2a or 2b is used for transmitting the CQI and the HARQ ACK/NACK. In case of an extended CP, PUCCH format 2 may also be used for transmitting the CQI and the HARQ ACK/NACK.

PUCCH format 3 is used for carrying an encoded UCI of 48 bits. PUCCH format 3 may carry the HARQ ACK/NACK for a plurality of serving cells, the SR (if existed) and the CSI report for a serving cell.

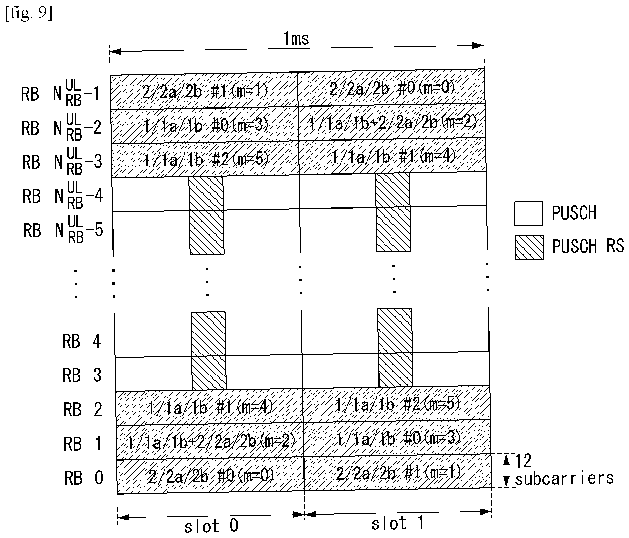

FIG. 9 illustrates an example of a formation that PUCCH formats are mapped to the PUCCH regions of the UL physical resource blocks in the wireless communication system to which the present application can be applied.

A PUCCH for a UE is allocated to an RB pair in a subframe. The RBs belonging to the RB pair occupy different subcarriers in each of a first slot and a second slot. A frequency occupied by RBs belonged in the RB pair allocated to the PUCCH is changed based on a slot boundary. This is expressed that the RB pair allocated to the PUCCH is frequency-hopped in the slot boundary. A UE transmits UL control information through different subcarriers according to time, thereby obtaining a frequency diversity gain.

In FIG. 9, $N_{\mathrm{RB}}^{\mathrm{UL}}$ represents the number of resource block in UL, and 0, 1, ..., $N_{\mathrm{RB}}^{\mathrm{UL}}-1$ signifies given number of the physical resource block. Basically, the PUCCH is mapped to both edges of the UL frequency blocks. As shown in FIG. 9, PUCCH formats 2/2a/2b are mapped to the respective PUCCH regions marked by m=0 and 1, and this may be represented as PUCCH formats 2/2a/2b are mapped to the resource blocks located at band edges. In addition, PUCCH formats 2/2a/2b and PUCCH formats 1/1a/1b are mixedly mapped to the PUCCH region marked by m=2. Next, PUCCH formats 1/1a/1b may be mapped to the PUCCH regions marked by m=3, 4 and 5. The number $N_{\mathrm{RB}}^{(2)}$ of PUCCH RBs usable by PUCCH formats 2/2a/2b may be indicated by the UEs within a cell by broadcasting signaling.

Table 4 represents modulation schemes according to the PUCCH format and number of bits per subframe. In Table 4, PUCCH formats 2a and 2b correspond to the case of normal cyclic shift.

[Table 4]

| PUCCH format | Modulation scheme | Number of bits per subframe, $M_{\mathrm{bit}}$ |
|---|---|---|
| 1 | N/A | N/A |
| 1a | BPSK | 1 |
| 1b | QPSK | 2 |

(continued)

| PUCCH format | Modulation scheme | Number of bits per subframe, $M_{bit}$ |
|---|---|---|
| 2 | QPSK | 20 |
| 2a | QPSK+BPSK | 21 |
| 2b | QPSK+QPSK | 22 |
| 3 | QPSK | 48 |

Table 5 represents the number of symbols of PUCCH demodulation reference signal per slot according to the PUCCH format.

[Table 5]

| PUCCH format | Normal cyclic prefix | Extended cyclic prefix |
|---|---|---|
| 1, 1a, 1b | 3 | 2 |
| 2, 3 | 2 | 1 |
| 2a, 2b | 2 | N/A |

Table 6 represents SC-FDMA symbol location of the PUCCH demodulation reference signal according to the PUCH format. In Table 6, *l* represents a symbol index.

[Table 6]

| PUCCH format | Set of values for *l* | |
|---|---|---|
| | Normal cyclic prefix | Extended cyclic prefix |
| 1, 1a, 1b | 2, 3, 4 | 2, 3 |
| 2, 3 | 1, 5 | 3 |
| 2a, 2b | 1, 5 | N/A |

Hereinafter, PUCCH formats 2/2a/2b will be described.

PUCCH formats 2/2a/2b are used for CQI feedback (or ACK/NACK transmission together with the CQI feedback) for DL transmission. In order for the CQI to be transmitted with the ACK/NACK may be transmitted with being embedded in the CQI RS (in case of a normal CP), or transmitted with the CQI and the ACK/NACK being joint coded (in case of an extended CP).

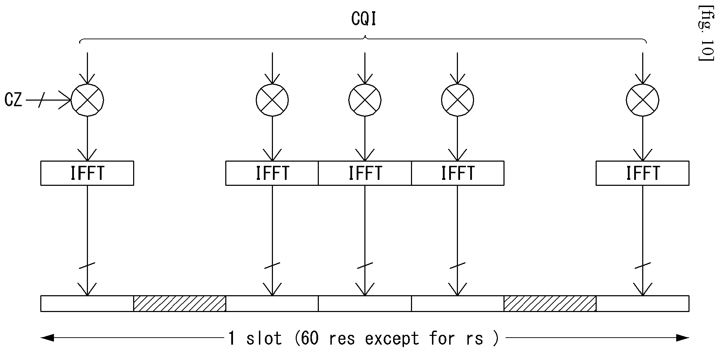

FIG. 10 shows a structure of CQI channel in case of a normal CP in the wireless communication system to which the present invention can be applied.

Among SC-FDMA symbols 0 to 6 in a slot, SC-FDMA symbols 1 to 5 (a second and a sixth symbols) are used for transmitting demodulation reference signal (DMRS), and the CQI information may be transmitted in the remainder SC-FDMA symbols. Meanwhile, in case of the extended CP, one SC-FDMA symbol (SC-FDMA symbol 3) is used for transmitting the DMRS.

In PUCCH formats 2/2a/2b, the modulation by the CAZAC sequence is supported, and the QPSK modulated symbol is multiplied by the CAZAC sequence of length 12. The cyclic shift (CS) of sequence may be changed between symbols and slots. An orthogonal covering is used for the DMRS.

In two SC-FDMA symbols which are three SC-FDMA symbol intervals from seven SC-FDMA symbols included in a slot, the reference signal (DMRS) is carried, and in the remainder five SC-FDMA symbols, the CQI information is carried. In order to support a high speed UE, two RSs are used in a slot. In addition, the respective UEs are distinguished by using the cyclic shift (CS) sequence. The CQI information symbols are transmitted with being modulated to whole SC-FDMA symbol, and the SC-FDMA symbol includes one sequence. That is, the UE transmits the CQI with being modulated to each sequence.

The number of symbols which may be transmitted to one TTI is 10, and the modulation of the CQI information is also defined to the QPSK. Front five symbols are transmitted in a first slot, and the remainder five symbols are transmitted in a second slot. Since the CQI value of 2 bits may be carried in case of using the QPSK mapping for the SC-FDMA symbol, the CQI value of 10 bits may be carried in one slot. Accordingly, the CQI value of maximum 20 bits may be carried in one subframe. In order to spread the CQI information in a frequency domain, a frequency domain spread code is used.

As the frequency domain spread code, the CAZAC sequence of length 12 (e.g., ZC sequence) may be used. Each control channel may be distinguished by applying the CAZAC sequence that has different cyclic shift values. An inverse fast Fourier transform is performed for the CQI information which is spread in the frequency domain.

By the cyclic shifts that have twelve equivalent intervals, twelve different UEs may be orthogonally multiplexed on the same PUCCH RB. In case of a normal CP, the DMRS sequence on SC-FDMA symbol 1 and 5 (on SC-FDMA symbol 3 in case of an extended CP) is similar to the CQI signal sequence on the frequency domain, but the modulation similar to that of the CQI information is not applied.

A UE may be semi-statically configured to report different CQI, PMI and RI types periodically on the PUCCH resources indicated by the PUCCH resource indexes $n_{\text{PUCCH}}^{(1,\tilde{p})}$, $n_{\text{PUCCH}}^{(2,\tilde{p})}$, $n_{\text{PUCCH}}^{(3,\tilde{p})}$ by a higher layer signaling. Herein, the PUCCH resource index $n_{\text{PUCCH}}^{(2,\tilde{p})}$ is information that indicates the PUCCH region used for transmitting PUCCH formats 2/2a/2b and cyclic shift (CS) to be used.

Table 7 represents an orthogonal sequence (OC) $\left[ \overline{w}^{(\tilde{p})}(0) \quad \cdots \quad \overline{w}^{(\tilde{p})}(N_{\text{RS}}^{\text{PUCCH}} - 1) \right]$ for RS in PUCCH formats 2/2a/2b/3.

[Table 7]

| Normal cyclic prefix | Extended cyclic prefix |
|---|---|
| [1 1] | [1] |

Next, PUCCH formats 1/1a/1b will be described below.

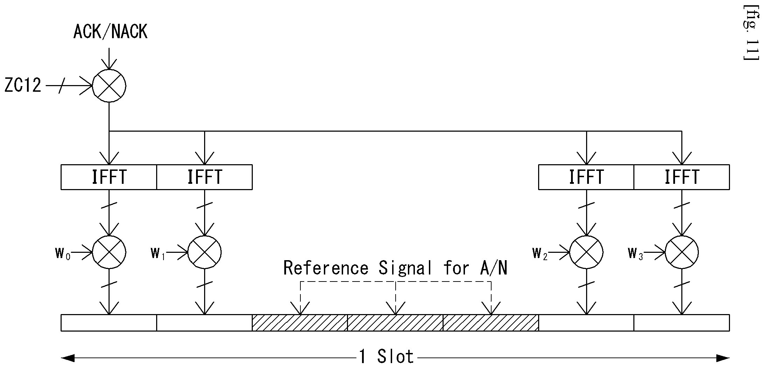

FIG. 11 shows a structure of ACK/NACK in case of a normal CP in the wireless communication system to which the present invention can be applied.

A confirmation response information (in a state of not scrambled) of 1 bit or 2 bits may be represented as a HARQ ACK/NACK modulation symbol using the BPSK and QPSK modulation techniques, respectively. An affirmative confirmation response (ACK) may be encoded as '1', and a negative confirmation response (NACK) may be encoded as '0'.

When transmitting a control signal in an allocated bandwidth, two dimensional spread is applied in order to increase a multiplexing capacity. That is, a spread in frequency domain and a spread in time domain are simultaneously applied in order to increase the number of UE or the number of control channel that can be multiplexed.

In order to spread an ACK/NACK signal in frequency domain, a frequency domain sequence is used as a basic sequence. As the frequency domain sequence, Zadoff-Chu (ZC) sequence which is one of constant amplitude zero autocorrelation waveform sequences may be used.

That is, in PUCCH format 1a/1b, the symbol modulated using the BPSK or the QPSK modulation scheme is multiplied by the CAZAC sequence (e.g., the ZC sequence) of length 12. For example, the result of the CAZAC sequence r(n) (n=0, 1, 2, ..., N-1) of length N modulated to modulation symbol d(0) is y(0), y(1), y(2), ..., y(N-1). The symbols y(0), y(1), y(2), ..., y(N-1) may be referred to as block of symbols.

Like this, different cyclic shifts (CS) are applied to the Zadoff Chu (ZC) sequence which is a basic sequence, and multiplexing of different UEs or different control channels may be applied. The number of CS resources supported by SC-FDMA symbol which is for PUCCH RBs in the HARQ ACK/NACK transmission is setup by a cell-specific higher layer signaling parameter $(\Delta_{\text{shift}}^{\text{PUCCH}})$.

After multiplying the CAZAC sequence to the modulation symbol, the block-wise spread using an orthogonal sequence is applied. That is, the ACK/NACK signal spread in a frequency domain is spread in a time domain by using an orthogonal spreading code. As for the orthogonal spreading code (or the orthogonal cover sequence or an orthogonal cover code (OCC)), a Walsh-Hadamard sequence or a Discrete Fourier Transform (DFT) sequence may be used. For example, the ACK/NACK signal may be spread by using the orthogonal sequence (w0, w1, w2, w3) of length 4 for four symbols. In addition, an RS is also spread through the orthogonal sequence of length 3 or length 2. This is referred to as an orthogonal covering (OC).

As for the CDM of ACK/NACK information or demodulation reference signal, an orthogonal covering such as a Walsh code, a DFT matrix, etc. may be used.

The DFT matrix is comprised of square matrixes, and constructed as a size of N $\times$ N (N is a natural number).

The DFT matrix may be defined as Equation 1.

[Equation 1]

$$W - \left( \frac{\omega^{jk}}{\sqrt{N}} \right)_{j,k-0,\ldots,N-1}$$

Also, the DFT matrix may be represented as a matrix of Equation 2 below which is equivalent to Equation 1.

[Equation 2]

$$W = \frac{1}{\sqrt{N}} \begin{bmatrix} 1 & 1 & 1 & 1 & \cdots & 1 \\ 1 & \omega & \omega^2 & \omega^3 & \cdots & \omega^{N-1} \\ 1 & \omega^2 & \omega^4 & \omega^6 & \cdots & \omega^{2(N-1)} \\ 1 & \omega^3 & \omega^6 & \omega^9 & \cdots & \omega^{3(N-1)} \\ \vdots & \vdots & \vdots & \vdots & \ddots & \vdots \\ 1 & \omega^{N-1} & \omega^{2(N-1)} & \omega^{3(N-1)} & \cdots & \omega^{(N-1)(N-1)} \end{bmatrix},$$

In Equation 2, $\omega = e^{-\frac{2\pi i}{N}}$ signifies a primitive Nth root of unity.
The DFT matrix of 2 points, 4 points and 8 points correspond to Equations 3, 4 and 5 below.

[Equation 3]

$$\frac{1}{\sqrt{2}} \begin{bmatrix} 1 & 1 \\ 1 & -1 \end{bmatrix}$$

[Equation 4]

$$W = \frac{1}{\sqrt{4}} \begin{bmatrix} 1 & 1 & 1 & 1 \\ 1 & -i & -1 & i \\ 1 & -1 & 1 & -1 \\ 1 & i & -1 & -i \end{bmatrix}$$

[Equation 5]

$$W = \frac{1}{\sqrt{8}} \begin{bmatrix} \omega^0 & \omega^0 & \omega^0 & \ldots & \omega^0 \\ \omega^0 & \omega^1 & \omega^2 & \ldots & \omega^7 \\ \omega^0 & \omega^2 & \omega^4 & \ldots & \omega^{14} \\ \omega^0 & \omega^3 & \omega^6 & \ldots & \omega^{21} \\ \omega^0 & \omega^4 & \omega^8 & \ldots & \omega^{28} \\ \omega^0 & \omega^5 & \omega^{10} & \ldots & \omega^{35} \\ \vdots & \vdots & \vdots & \ddots & \vdots \\ \omega^0 & \omega^7 & \omega^{14} & \ldots & \omega^{49} \end{bmatrix}$$

In case of a normal CP, in SC-FDMA symbols that are series of 3 middle parts out of 7 SC-FDMA symbols included in a slot, the reference signal (RS) is carried, and in the rest 4 SC-FDMA symbols, the ACK/NACK signal is carried. Meanwhile, in case of an extended CP, the RS may be carried in two consecutive symbols of the middle parts. The number and location of symbols used for the RS may be changed according to a control channel, and the number and location of symbols used for the ACK/NACK signal related may be changed according to the control channel as well.

For normal ACK/NACK information, the Walsh-Hadamard sequence having length 4 is used, and for shortened ACK/NACK information and the reference signal, a DFT of length 3 is used.

For the reference signal of an extended CP case, the Walsh-Hadamard sequence having length 2 is used.

Table 8 represents an orthogonal sequence of length 4 $\begin{bmatrix} w(0) & \cdots & w(N_{\mathrm{SF}}^{\mathrm{PUCCH}} - 1) \end{bmatrix}$ for PUCCH format 1a/1b.

[Table 8]

| Sequence index $n_{\mathrm{oc}}^{(\tilde{p})}(n_{\mathrm{s}})$ | Orthogonal sequences $\begin{bmatrix} w(0) & \cdots & w(N_{\mathrm{SF}}^{\mathrm{PUCCH}} - 1) \end{bmatrix}$ |
|---|---|
| 0 | [+1 +1 +1 +1] |
| 1 | [+1 -1 +1 -1] |
| 2 | [+1 -1 -1 +1] |

Table 9 represents an orthogonal sequence of length 3 $\begin{bmatrix} w(0) & \cdots & w(N_{\mathrm{SF}}^{\mathrm{PUCCH}} - 1) \end{bmatrix}$ for PUCCH format 1a/1b.

[Table 9]

| Sequence index $n_{\mathrm{oc}}^{(\tilde{p})}(n_{\mathrm{s}})$ | Orthogonal sequences $\begin{bmatrix} w(0) & \cdots & w(N_{\mathrm{SF}}^{\mathrm{PUCCH}} - 1) \end{bmatrix}$ |
|---|---|
| 0 | [1 1 1] |
| 1 | [1 $e^{j2\pi/3}$ $e^{j4\pi/3}$] |
| 2 | [1 $e^{j4\pi/3}$ $e^{j2\pi/3}$] |

Table 10 represents an orthogonal sequence $\begin{bmatrix} \overline{w}^{(\tilde{p})}(0) & \cdots & \overline{w}^{(\tilde{p})}(N_{\mathrm{RS}}^{\mathrm{PUCCH}} - 1) \end{bmatrix}$ for the RS in PUCCH format 1/1a/1b.

| Sequence index $\overline{n}_{oc}^{(\tilde{p})}(n_s)$ | Normal cyclic prefix | Extended cyclic prefix |
|---|---|---|
| 0 | [1 1 1] | [1 1] |
| 1 | [1 $e^{j2\pi/3}$ $e^{j4\pi/3}$] | [1 -1] |
| 2 | [1 $e^{j4\pi/3}$ $e^{j2\pi/3}$] | N/A |

As described above, by using the CS resource in the frequency domain and the OC resource in the time domain, numerous UEs may be multiplexed in a code division multiplexing (CDM) method. That is, the ACK/NACK information and the RS of a great number of UEs may be multiplexed on the same PUCCH RB.

For the time domain spreading CDM like this, the number of extended codes that are supported for the ACK/NACK information is limited by the number of RS symbols. That is, since the number of SC-FDMA symbols in the RS transmission is less than the number of SC-FDMA symbols in the ACK/NACK information transmission, the multiplexing capacity of RS is smaller than the multiplexing capacity of ACK/NACK information.

For example, in case of a normal CP, the ACK/NACK information may be transmitted in four symbols. In case of an extended CP, three orthogonal spreading codes, not four, may be used. This is because the number of RS transmission symbols is limited to three, and three orthogonal spreading codes only may be used for the RS.

In case that three symbols in one slot are used for the RS transmission and four symbols are used for the ACK/NACK information transmission in the subframe of a normal CP, for example, if six cyclic shifts (CSs) can be used in the frequency domain and three orthogonal covering (OC) resources can be used in the time domain, the HARQ confirmation response from total 18 different UEs may be multiplexed in one PUCCH RB. If two symbols in one slot of a subframe of the extended CP are used for the RS transmission and four symbols are used for the ACK/NACK information transmission, for example, if six cyclic shifts (CSs) can be used in the frequency domain and two orthogonal covering (OC) resources can be used in the time domain, the HARQ confirmation response from total 12 different UEs may be multiplexed in the PUCCH RB.

Subsequently, PUCCH format 1 will be described. The schedule request (SR) is transmitted in a way of a UE being requested to be scheduled or a way of not being requested. The SR channel reuses the ACK/NACK channel structure in PUCCH format 1a/1b, and is configured in on-off keying (OOK) method based on an ACK/NACK channel design. In the SR, the reference signal is not transmitted. Accordingly, in the normal CP, the sequence of length 7 is used, and in the extended CP, the sequence of length 6 is used. For the SR and the ACK/NACK, different cyclic shifts or orthogonal covers may be allocated.

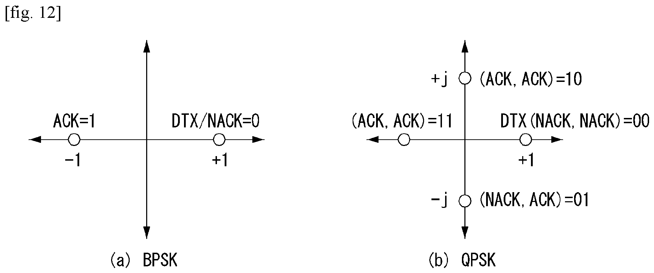

FIG. 12 illustrates a method for multiplexing the ACK/NACK and the SR in the wireless communication system to which the present invention can be applied.

The structure of SR PUCCH format 1 is identical to the structure of ACK/NACK PUCCH format 1a/1b illustrated in FIG. 12.

The SR is transmitted by using the on-off keying (KOO) method. Particularly, the UE transmits the SR having a modulation symbol d(0) =1 to request the PUSCH resource (a positive SR), and in case of not requesting the scheduling (a negative SR), nothing is transmitted. As the PUCCH structure for the ACK/NACK is reused for the SR, different PUCCH resource index (that is, a combination of different CS and orthogonal code) within a same PUCCH region may be allocated to the SR (PUCCH format 1) or to the HARQ ACK/NACK (PUCCH format 1a/1b). The PUCCH resource index that is going to be used by the UE for the SR transmission may be set by the UE-specific higher layer signaling.

In case that the UE is required to transmit the positive SR in the subframe in which the CQI transmission is scheduled, CQI is dropped and the SR only may be transmitted. Similarly, if a case is occurred that the SR and the SRS should be transmitted at the same time, the UE drops the CQI rather may transmit the SR only.

In case that the SR and the ACK/NACK are occurred in the same subframe, the UE transmits the ACK/NACK on the SR PUCCH resource that is allocated for the positive SR. In the meantime, in case of the negative SR, the UE transmits the ACK/NACK on the allocated ACK/NACK resource.

FIG. 12 illustrates a property mapping for the simultaneous transmission of the ACK/NACK and the SR. In particular, it illustrates that the NACK (or, in case of 2 MIMO codewords, NACK, NACK) is modulated to map to +1. Accordingly, it is processed as NACK when a discontinuous transmission (DTX) is occurred.

For the SR and persistent scheduling, the ACK/NACK resource consisting of a CS, an OC, and a physical resource block (PRB) may be allocated to the UE through the radio resource control (RRC). Meanwhile, for the dynamic ACK/NACK transmission and non-persistent scheduling, the ACK/NACK resource may be allocated to the UE implicitly through the lowest CCE index of the PDCCH corresponding to the PDSCH.

In case of requiring resources for the UL data transmission, the UE may transmit the SR. That is, the SR transmission is triggered by an event.

The SR PUCCH resource is configured by a higher layer signaling except a case that the SR is transmitted with the HARQ ACK/NACK by using PUCCH format 3. That is, it is configured by a SchedulingRequestConfig information element that is transmitted through the radio resource control (RRC) message (for example, RRC connection reconfiguration message).

Table 11 exemplifies the SchedulingRequestConfig information element.

[Table 11]

```
-- ASN1START


SchedulingRequestConfig ::=      CHOICE {
   release                    NULL,
   setup                    SEQUENCE {
      sr-PUCCH-ResourceIndex         INTEGER (0..2047),
      sr-ConfigIndex            INTEGER (0..157),
      dsr-TransMax           ENUMERATED {
                           n4, n8, n16, n32, n64, spar
e3, spare2, spare1}
   }
}


SchedulingRequestConfig-v1020 ::=  SEQUENCE {
   sr-PUCCH-ResourceIndexP1-r10    INTEGER (0..2047)
   OPTIONAL       -- Need OR
}


-- ASN1STOP
```

Table 12 represents a field that is included in the SchedulingRequestConfig information element.

[Table 12]

| SchedulingRequestConfig field descriptions |
|---|
| **dsr-TransMax** |
| Parameter for the SR transmission. Value n4 represents 4 transmissions, value n8 represents 8 transmissions, and the rest is the same as above. |
| **sr-ConfigIndex** |
| Parameter ($I_{SR}$). Values 156 and 157 are not applied to release 8. |

(continued)

| sr-PUCCH-ResourceIndex, sr-PUCCH-ResourceIndexP1 |
|---|
| Parameter ($n_{PUCCH,SRI}^{(1,p)}$) for the respective antenna port P0 and P1. E-UTRAN is configured the sr-PUCCH-ResourceIndexP1 only in case that the sr-PUCCHResourceIndex is set. |

Referring to Table 12, the UE receives sr-PUCCH-ResourceIndex parameter and sr-ConfigIndex parameter ($I_{SR}$)indicating the SR configuration index through the RRC message for the SR transmission. By the sr-ConfigIndex parameter, $SR_{PERIODICITY}$ indicating the periodicity when the SR is transmitted and $N_{OFFSET,SR}$ indicating the subframe where the SR is transmitted may be configured. That is, the SR is transmitted from a specific subframe that is periodically repeated according to $I_{SR}$ that is given by a higher layer. Also, the subframe resource and CDM/frequency division multiplexing (FDM) resource may be allocated to the resource for the SR.

Table 13 represents the SR transmission periodicity according to the SR configuring index and the SR subframe offset.

[Table 13]

| SR configuration Index $I_{SR}$ | SR periodicity (ms) $SR_{PERIODICITY}$ | SR subframe offset $N_{OFFSET,SR}$ |
|---|---|---|
| 0 - 4 | 5 | $I_{SR}$ |
| 5 - 14 | 10 | $I_{SR}$ - 5 |
| 15 - 34 | 20 | $I_{SR}$ - 15 |
| 35 - 74 | 40 | $I_{SR}$ - 35 |
| 75 - 154 | 80 | $I_{SR}$ - 75 |
| 155 - 156 | 2 | $I_{SR}$ - 155 |
| 157 | 1 | $I_{SR}$ - 157 |

**Buffer Status Reporting (BSR)**

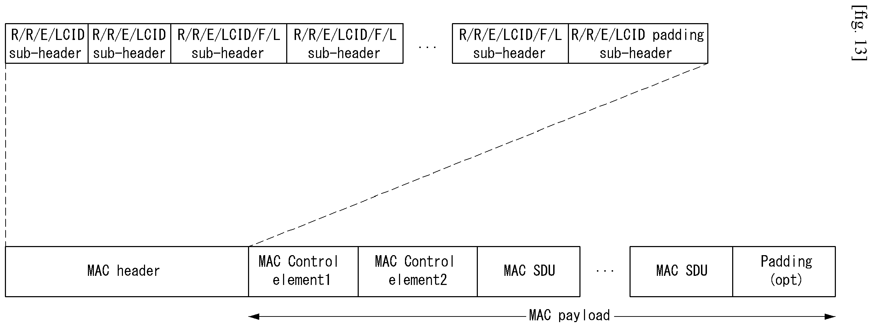

FIG. 13 illustrates the MAC PDU used in the MAC entity in the wireless communication system to which the present invention can be applied.

Referring to FIG. 13, the MAC PDU includes a MAC header, at least one MAC service data unit (SDU) and at least one control element, additionally may include a padding. In some cases, at least one of the MAC SDUs and the MAC control elements may not be included in the MAC PDU.

As an example of FIG. 13, it is common that the MAC control elements are located ahead of the MAC SDUs. And the size of MAC control elements may be fixed or changeable. In case that the size of MAC control elements is changeable, it may be determined through an extended bit whether the size of MAC control elements is extended. The size of MAC SDU may be also variable.

The MAC header may include at least one sub-header. In this time, at least one sub-header that is included in the MAC header is respectively corresponding to the MAC SDUs, the MAC control elements and the padding, and the order of the sub-header is same as the arrangement order of the corresponding elements. For example, as an example of FIG. 13, if there are included MAC control element 1, MAC control element 2, a plurality of MAC SDUs and padding in the MAC PDU, in the MAC header, the following may be arranged in order as a sub-header corresponding to the MAC control element 1, a sub-header corresponding to the MAC control element 2, a plurality of sub-headers corresponding to a plurality of MAC SDUs respectively and a sub-header corresponding to the padding.

Sub-headers included in the MAC header, as an example of FIG. 13, six header fields may be included. Particularly, the sub-header may include six header fields of R/R/E/LCID/F/L.

For the sub-header corresponding to the very last one among the sub-header corresponding to the MAC control element of fixed size and data fields included in the MAC PDU, as an example illustrated in FIG. 13, the sub-header that is included four header fields may be used. In case that the sub-header includes four fields like this, the four fields may be R/R/E/ LCID.

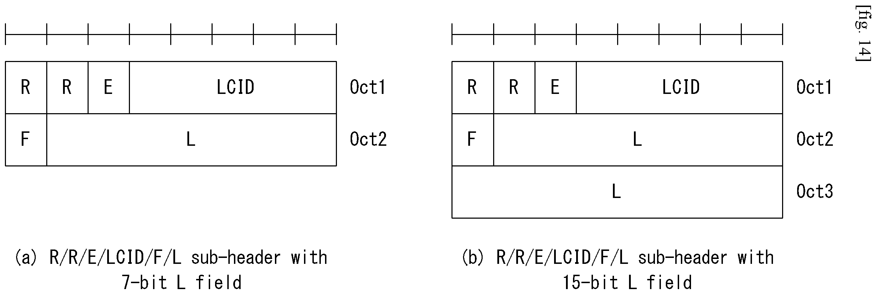

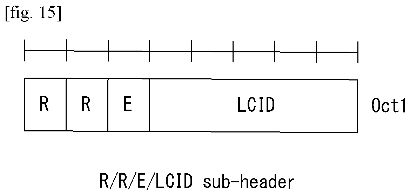

FIG. 14 and FIG. 15 illustrate the sub-header of the MAC PDU in the wireless communication system to which the present invention can be applied.

Each field is described as below with reference to FIG. 14 and FIG. 15.

1) R: Reserved bit, which is not used.

2) E: Extended field, which represents whether the elements corresponding to the sub-header are extended. For example, in case that E field is '0', the element corresponding to the sub-header is terminated without any repeat, and in case that E field is '1', the element corresponding to the sub-header is repeated once more and may be extended by twice in the length.

LCID: Logical channel identification field identifies a logical channel corresponding to the relevant MAC SDU or identifies a type of the relevant MAC control element and padding. If the MAC SDU is associated with the sub-header, it may show which logical channel the MAC SDU is corresponding to, and if the MAC control element is associated with the sub-header, it may show what the MAC control element is.

Table 14 represents the value of LCID for the DL-SCH

[Table 14]

| Index | LCID values |
| --- | --- |
| 00000 | CCCH |
| 00001-01010 | Identity of the logical channel |
| 01011-11001 | Reserved |
| 11010 | Long DRX Command |
| 11011 | Activation/Deactivation |
| 11100 | UE Contention Resolution Identity |
| 11101 | Timing Advance Command |
| 11110 | DRX Command |
| 11111 | Padding |

Table 15 represents the value of LCID for the UL-SCH

[Table 15]

| Index | LCID values |
| --- | --- |
| 00000 | CCCH |
| 00001-01010 | Identity of the logical channel |
| 01011-11000 | Reserved |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

In LTE/LTE-A system, the UE may report the buffer state of its own to the network by configuring one of the index value among truncated BSR, short BSR, and long BSR in the LCID field.

The relationship of mapping between the index and the LCID value illustrated in Table 14 and Table 15 is exemplified for the convenience of the descriptions, but the present invention is not limited thereto.

4) F: Format field, which represents the size of L field.

5) L: Length field, which represents the size of MAC SDU and MAC control element corresponding to the sub-header. If the size of MAC SDU or MAC control element corresponding to the sub-header is equal to or less than 127 bits, the 7-bit L field is used (FIG. 14 (a)), otherwise, the 15-bit L field may be used (FIG. 14 (b)). In case that the size of MAC control element is changeable, the size of MAC control element may be defined by the L field. In case that the size of MAC control element is fixed, the size of MAC control element may be determined without the size of MAC control element being defined by the L field, accordingly the F and L field may be omitted as shown in FIG. 15.

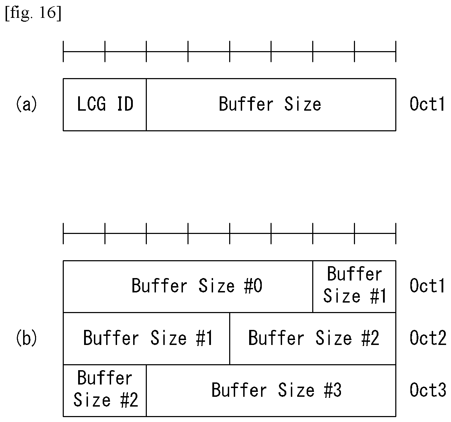

FIG. 16 illustrates formats of the MAC control elements in order to report the buffer state in the wireless communication system to which the present invention can be applied.

In case of the truncated BSR and short BSR being defined in the LCID field of sub-header, the MAC control element corresponding to the sub-header, as shown in FIG. 16 (a), may be configured to include one logical channel group identification (LCG ID) field and one buffer size field indicating the buffer state of the LCG. The LCG ID field is for identifying the logical channel group that is required to report the buffer state, which may have the size of 2 bits.

The buffer size field is used for identifying the total amount of available data from the all logical channels that are included in the LCG. The available data includes all the data that are going to be transmitted from the RLC layer and the PDCP layer, and the amount of data is represented in byte. In this time, the size of RLC header and MAC header may be excluded when calculating the amount of data. The buffer size field may be 6 bits.

In case of the extended BSR being defined in the LCID field of sub-header, the MAC control element corresponding to the sub-header, as shown in FIG. 16 (b), may include four buffer size fields indicating the buffer state of four groups having 0 to 3 LCG IDs. Each of the buffer size fields may be used for identifying the total amount of available data from different logical channel groups.

**Carrier Aggregation**

A communication environment considered in the embodiments of the present invention includes all multi-carrier environments. That is, a multi-carrier system or a carrier aggregation (CA) system used in the present invention refers to a system for aggregating and utilizing one or more component carriers having a bandwidth smaller than a target bandwidth, for wideband support.

In the present invention, multi-carrier refers to carrier aggregation. Carrier aggregation includes aggregation of contiguous carriers and aggregation of non-contiguous carriers. In addition, the number of component carriers aggregated in downlink and uplink may be differently set. The case where the number and/or bandwidth of downlink component carriers (DL CCs) and the number and bandwidth of uplink component carriers (UL CCs) are the same is referred to as symmetric aggregation and the case where the number and/or bandwidth of downlink component carriers (DL CCs) and the number and bandwidth of uplink component carriers (UL CCs) are different is asymmetric aggregation. Such carrier aggregation is used interchangeable with the terms "carrier aggregation", "bandwidth aggregation" or "spectrum aggregation".

Carrier aggregation configured by aggregating two or more CCs aims at support a bandwidth of up to 100 MHz in an LTE-A system. When one or more carriers having a bandwidth smaller than a target bandwidth are aggregated, the bandwidth of the aggregated carriers may be restricted to a bandwidth used in the existing system, for backward compatibility with the existing IMT system. For example, the existing 3GPP LTE system may support bandwidths of 1.4, 3, 5, 10, 15 and 20 MHz and an LTE_Advanced (LTE_A) system evolved from the LTE system may support a bandwidth greater than 20 MHz using only the bandwidths supported by the LTE system. Alternatively, the carrier aggregation system used in the present invention may define a new bandwidth so as to support CA, regardless of the bandwidths used in the existing system.

The above-described carrier aggregation environment may be called a multiple-cell environment. The cell is defined as a combination of downlink resources (DL CCs) and uplink resources (UL CCs), and the uplink resources are not mandatory. Accordingly, the cell may be composed of downlink resources alone or both downlink resources and uplink resources. If a specific UE has one configured serving cell, the UE may have one DL CC and one UL CC. If a specific UE has two or more configured serving cells, the UE may have DL CCs corresponding in number to the number of cells and the number of UL CCs may be equal to or less than the number of DL CCs, and vice versa. If a specific UE has a plurality of configured service cells, a carrier aggregation environment in which the number of DL CCs is greater than the number of UL CCs may also be supported. That is, carrier aggregation may be regarded as aggregation of two or more cells having different carrier frequencies (center frequencies of a cell). If carrier aggregation is supported, linkage between a carrier frequency (or a DL CC) of downlink resources and a carrier frequency (or a UL CC) of uplink resources may be indicated by system information. The DL CC and the UL CC may be referred to as DL cell and UL cell, respectively. The cell described herein should be distinguished from a "cell" as a general region covered by a BS.

A cell used in the LTE-A system includes a primary cell (PCell) and a secondary cell (SCell). The PCell and the SCell may be used as service cells. In case of a UE which is in an RRC_connected state but does not set carrier aggregation or supports carrier aggregation, only one serving cell composed of a PCell exists. In contrast, in case of a UE which is in an RRC_CONNECTED state and sets carrier aggregation, one or more serving cells exist. The serving cell includes a PCell and one or more SCell.

A serving cell (PCell and SCell) may be set through an RRC parameter. PhyCellId is a physical layer identifier of a cell and has an integer value from 0 to 503. SCellIndex is a short identifier used to identify an SCell and has an integer value from 1 to 7. A value of 0 is applied to the PCell and SCellIndex is previously given to be applied to the Scell. That is, a cell having a smallest cell ID (or a cell index) in ServCellIndex becomes the PCell.

The PCell refers to a cell operating on a primary frequency (e.g., a primary CC (PCC)). The PCell is used to perform an initial connection establishment process or a connection re-establishment process at a UE. The PCell may indicate a cell indicated in a handover process. The PCell refers to a cell for performing control-associated communication among serving cells set in a carrier aggregation environment. That is, a UE may receive a PUCCH allocated by a PCell to which the UE belongs and perform transmission and use only the PCell to acquire system information and change a monitoring procedure. In evolved universal terrestrial radio access (E-UTRAN), a UE supporting a carrier aggregation environment may change only the PCell for a handover procedure using an RRCConnectionReconfiguration message of a higher layer including mobilityControlInfo.

The SCell refers to a cell operating on a secondary frequency (e.g., a secondary CC (SCC)). Only one PCell may be allocated to a specific UE and one or more SCells may be allocated to the specific UE. The SCell may be configured after radio resource control (RRC) connection establishment and may be used to provide additional radio resources. A PUCCH is not present in cells except for the PCell among serving cells set in a carrier aggregation environment, that is, the SCells. E-UTRAN may provide all system information associated with the operation of an associated cell in an RRC_CONNECTED state via a dedicated signal when SCells are added to a UE supporting a carrier aggregation environment. Change of system information may be controlled by release and addition of the SCell. At this time, an RRCConnectionReconfiguration message of a higher layer may be used. The E-UTRAN may transmit a dedicated signal having a different parameter to each UE, rather than broadcasting a signal in the associated SCell.

After an initial security activation process begins, an E-UTRAN may configure a network by adding one or more SCells to a PCell initially configured in a connection establishment process. In a carrier aggregation environment, the PCell and the SCell may operate as respective CCs. In the following embodiments, a primary CC (PCC) may be used as the same meaning as the PCell and a secondary CC (SCC) may be used as the meaning as the SCell.

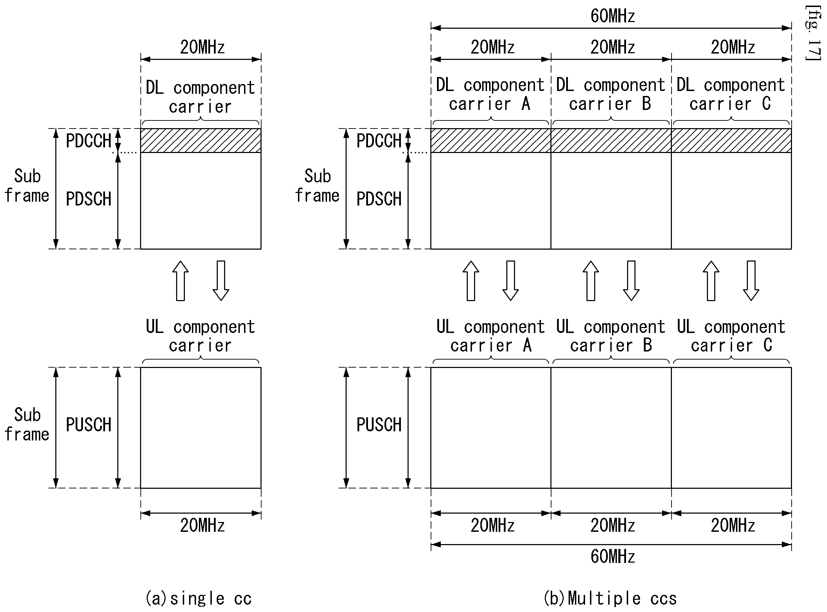

FIG. 17 represents an example of component carrier and carrier aggregation in the wireless communication system to which the present invention can be applied.

FIG. 17 (a) represents a single carrier structure that is used in a LTE system. There are DL CC and UL CC in component carrier. One component carrier may have 20 MHz frequency range.

FIG. 17 (b) represents a carrier aggregation structure that is used in a LTE-A system. FIG. 17 (b) represents a case that three component carriers having 20MHz frequency are aggregated. There are three DL CCs and UL CCs respectively, but the number of DL CCs and UL CCs are not limited thereto. In case of the carrier aggregation, the UE enables to monitor three CCs at the same time, to receive the DL signal/data, and to transmit the UL signal/data.

If, N DL CCs are managed in a specific cell, the network may allocate M (M≤N) DL CCs. In this case, the UE may monitor the limited M DL CCs only and receive the DL signal. Also, the network may give a priority to L (L≤M≤N) DL CCs and have the prioritized DL CCs allocated to the UE, in this case, the UE should monitor the DL CCs without fail. This way may be applied for the UL transmission.

The linkage between the DL resource carrier frequency (or DL CC) and the UL resource carrier frequency (or UL CC) may be instructed by a higher layer message like RRC message or system information. For example, the combination of DL resource and UL resource may be configured by the linkage that is defined by system information block type 2 (SIB2). Particularly, the linkage may signify the mapping relationship between the DL CC through which the PDCCH carrying a UL grant is transmitted and the UL CC that uses the UL grant, or signify the mapping relationship between the DL CC (or UL CC) through which the data for HARQ is transmitted and the UL CC (or DL CC) through which the HARQ ACK/NACK signal is transmitted.

**Uplink resource allocation procedure**

In 3GPP LTE/LTE-A system, in order to maximize resource utilization, the data transmission and reception method based on scheduling of an eNB is used. This signifies that if there are data to transmit by a UE, the UL resource allocation is preferentially requested to the eNB, and the data may be transmitted using only UL resources allocated by the eNB.

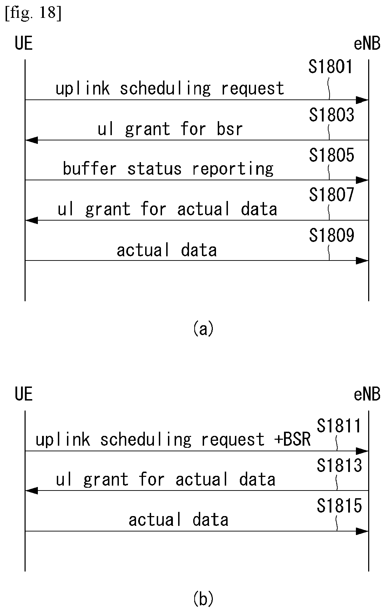

FIG. 18 illustrates a UL resource allocation procedure of a UE in the wireless communication system to which the present application can be applied.

For effective utilization of the UL radio resources, an eNB should know which sorts and what amount of data to be transmitted to the UL for each UE. Accordingly, the UE itself may forward the information of UL data to transmit, and the eNB may allocate the UL resources to the corresponding UE based on this. In this case, the information of the UL data that the UE forwards to the eNB is the quality of UL data stored in its buffer, and this is referred to as a buffer status report (BSR). The BSR is transmitted using a MAC control element in case that the resources on the PUSCH in current TTI are allocated to the UE and the reporting event is triggered.

FIG. 18(a) exemplifies a UL resource allocation procedure for actual data in case that the UL radio resources for the buffer status reporting (BSR) are not allocated to a UE. That is, for a UE that switches a state of active mode in the DRX mode, since there is no data resource allocated beforehand, the resource for UL data should be requested starting from the SR transmission through the PUCCH, in this case, the UL resource allocation procedure of 5 steps is used.

Referring to FIG. 18(a), the case that the PUSCH resource for transmitting the BSR is not allocated to a UE is illustrated, and the UE transmits the scheduling request (SR) to an eNB first in order to be allocated with the PUSCH resources (step, S1801).

The scheduling request (SR) is used to request in order for the UE to be allocated with the PUSCH resource for UL transmission in case that the reporting event is occurred but the radio resource is not scheduled on the PUSCH in current TTI. That is, the UE transmits the SR on the PUCCH when the regular BSR is triggered but does not have the UL radio resource for transmitting the BSR to the eNB. The UE transmits the SR through the PUCCH or starts the random access procedure according to whether the PUCCH resources for the SR are configured. In particular, the PUCCH resources in which the SR can be transmitted may be determined as a combination of the PRB through which the SR is transmitted, the cyclic shift (CS) applied to a basic sequence (e.g., ZC sequence) for spread in frequency domain of the SR and an orthogonal code (OC) for spread in time domain of the SR. Additionally, the SR periodicity and the SR subframe offset information may be included. The PUCCH resources through which the SR can be transmitted may be configured by a higher layer (e.g., the RRC layer) in UE-specific manner.

When a UE receives the UL grant for the PUSCH resources for BSR transmission from an eNB (step, S1803), the UE transmits the triggered BSR through the PUSCH resources which are allocated by the UL grant (step, S1805).

The eNB verifies the quality of data that the UE actually transmit to the UL through the BSR, and transmits the UL grant for the PUSCH resources for actual data transmission to the UE (step, S1807). The UE that receives the UL grant for actual data transmission transmits the actual UL data to the eNB through the PUSCH resources (step, S1809).

FIG. 18(b) exemplifies the UL resource allocation procedure for actual data in case that the UL radio resources for the BSR are allocated to a UE.

Referring to FIG. 18(b), the case that the PUSCH resources for BRS transmission are already allocated to a UE is illustrated. In the case, the UE transmits the BSR through the allocated PUSCH resources, and transmits a scheduling request to an eNB (step, S1811). Subsequently, the eNB verifies the quality of data to be transmitted to the UL by the UE through the BSR, and transmits the UL grant for the PUSCH resources for actual data transmission to the UE (step, S1813). The UE that receives the UL grant for actual data transmission transmits the actual UL data to the eNB through the allocated PUSCH resources (step, S1815).

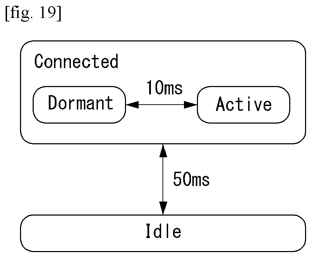

FIG. 19 is a diagram for describing a latency in C-plane required in 3GPP LTE-A to which the present invention can be applied.

Referring to FIG. 19, 3GPP LTE-A requests a transition time from an idle mode (a state that IP address is allocated) to a connected mode to be less than 50 ms. In this time, the transition time includes a configuration time (except latency for transmitting S1) in a user plane (U-plane). In addition, a transition time from a dormant state to an active state in the connection mode is requested to be less than 10 ms.

The transition from the dormant state to the active state may occur in 4 scenarios as follows.

- Uplink initiated transition, synchronized
- Uplink initiated transition, unsynchronized
- Downlink initiated transition, synchronized
- Downlink initiated transition, unsynchronized

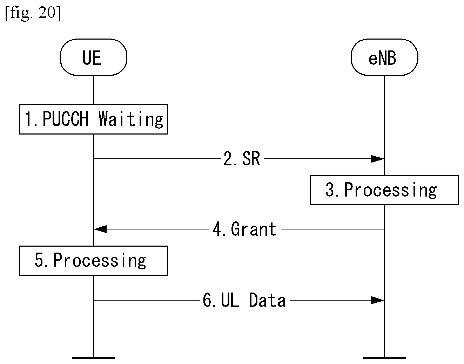

FIG. 20 is a diagram for describing a transition time from the dormant state to the active state for a synchronized UE required in 3GPP LTE-A to which the present invention can be applied.

In FIG. 20, the UL resource allocation procedure of 3 steps (in case of UL radio resources for the BSR are allocated) described in FIG. 18 above is illustrated. In LTE-A system, the latency is required for UL resource allocation as represented in Table 11 below.

Table 16 represents a transition time from the dormant state to the active state initiated by a UL transmission, in case of a synchronized UE which is required in LTE-A system.

[Table 16]

| Component | Description | Time [ms] |
|---|---|---|
| 1 | Average delay to next SR opportunity (1ms/5ms PUCCH cycle) | 0.5/2.5 |
| 2 | UE sends Scheduling Request | 1 |
| 3 | eNB decodes Scheduling Request and generates the Scheduling Grant | 3 |
| 4 | Transmission of Scheduling Grant | 1 |
| 5 | UE Processing Delay (decoding of scheduling grant + L1 encoding of UL data) | 3 |
| 6 | Transmission of UL data | 1 |
| | Total delay | 9.5/11.5 |

Referring to FIG. 20 and Table 16, as an average delay due to a RACH scheduling section that has a RACH cycle of 1 ms/5 ms, 0.5 ms/2.5 ms is required, and 1 ms is required for a UE to transmit the SR. And 3 ms is required for an eNB to decode the SR and generate the scheduling grant, and 1 ms is required to transmit the scheduling grant. And 3 ms is required for a UE to decode the scheduling grant and encode the UL data in L2 layer, and 1 ms is required to transmit the UL data.

As such, total 9.5/15.5 ms are required for a UE to complete a procedure of transmitting the UL data.

Accordingly, due to system characteristics of transmitting data based on scheduling by an eNB, the problem of increasing the latency even in case of transmitting UL data of a UE.

Particularly, in case of an intermittent application (e.g., a health care, a traffic safety, etc.) or an application in which fast transmission is required, such a data transmission method is not proper since it causes the latency inevitably.

**Random access procedure (RACH procedure)**

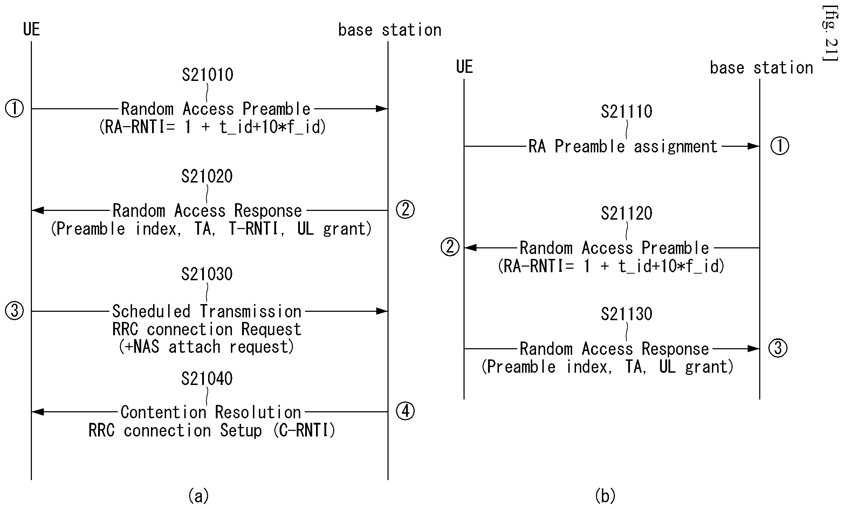

FIG. 21 illustrates one example of a random access procedure in an LTE system. The random access procedure is performed at the initial access in the RRC_IDLE, the initial access after the radio link failure, handover requesting the random access procedure, and the uplink or downlink data generation requiring the random access procedure during the RRC_CONNECTED. Some RRC messages including an RRC connection request message, a cell update message, an UTRAN registration area (URA) update message, and the like are also transmitted by using the random access procedure. A logical channel common control channel (CCCH), a dedicated control channel (DCCH), and a dedicated traffic channel (DTCH) may be mapped to a transport channel RACH. The transport channel RACH is mapped to a physical random access channel (PRACH). When the MAC layer of the UE instructs a UE physical layer to transmit the PRACH, the UE physical layer first selects one access slot and one signature and transmits A PRACH preamble to the uplink. The random access procedure is divided into a contention-based random access procedure and a non-contention based random access procedure. FIG. 21(a) above illustrates an example of a contention based random access procedure and FIG. 21(b) above illustrates an example of a non-contention based random access procedure. First, the contention-based random access procedure will be described with reference to FIG. 21(a) above. The UE receives and stores information on the random access from the eNB through the system information. Thereafter, when the random access is required, the UE transmits a random access preamble (also referred to as message 1) to the eNB (S21010). When the eNB receives the random access preamble from the UE, the eNB transmits a random access response message (also referred to as message 2) to the UE (S21020). Specifically, downlink scheduling information for the random access response message may be CRC-masked with a random access-radio network temporary identifier (RA-RNTI) and transmitted on an L1 or L2 control channel (PDCCH). The UE receiving the downlink scheduling signal masked with the RA-RNTI may receive and decode the random access response message from a physical downlink shared channel (PDSCH). Thereafter, the UE checks whether the random access response information indicated to the UE exists in the random access response message. Whether there is the random access response information indicated to the UE may be confirmed by whether there is a random access preamble ID (RAID) for the preamble transmitted by the UE. The random access response information includes timing alignment (TA) indicating timing offset information for synchronization, radio resource allocation information used in the uplink, temporary ID (e.g., temporary C-RNTI) for terminal identification, and the like. When receiving the random access response information, the UE performs uplink transmission (also referred to as message 3) on the uplink shared channel (S-SCH) according to the radio resource allocation information included in the response information (S21030). Here, the uplink transmission may be expressed as scheduled transmission. After receiving the uplink transmission from the UE, the eNB transmits a message (also referred to as message 4) for contention resolution to the UE through a downlink shared channel (DL-SCH) (S21040). First, the non-contention based random access procedure will be described with reference to FIG. 17(b) above. Before the UE transmits the random access preamble, the eNB allocates a non-contention random access preamble to the UE (S21110). The non-contention random access preamble may be allocated through a handover command or dedicated signaling such as the PDCCH. When the UE is allocated the non-contention random access preamble, the UE transmits the non-contention random access preamble allocated to the eNB (S21120). Thereafter, the eNB may transmit the random access response (also referred to as message 2) to the UE similar to step S2002 in the contention based random access procedure (S21130). In the random access procedure described above, the HARQ is not applied to the random access response, but the HARQ may be applied to a message for uplink transmission or contention resolution for the random access response. Therefore, the UE does not need to transmit the ACK or NACK for the random access response.

In a next-generation communication system, a scheme for achieving a very short latency time when transmitting and receiving information is considered. To this end, a structure for shortening a transmission time interval (TTI) is considered. At this time, for a short TTI structure, an appropriate data and control information transmission channel needs to be newly devised. The present invention proposes a method in which UEs supporting a short transmission time interval (sTTI) may perform an initial access faster when the initial access is performed. In addition, the present invention proposes a method in which the UEs supporting the sTTI may perform a scheduling request (SR) faster when performing the SR in a connected mode.

Hereinafter, a method in which the UEs supporting the sTTI performs the initial access faster by reducing a processing time and a method in which the UEs supporting the sTTI perform the scheduling request faster in the connected mode will be described, which are proposed by the present invention.

Hereinafter, for convenience of description, the UE supporting the sTTI will be briefly referred to as an sTTI UE (sUE).

**Initial access procedure for sTTI UEs**

In regard to the initial access procedure for the sUEs, (1) a method for reducing the processing time and (2) a processing unit when the initial access procedure is performed will be described.

Processing time Reduction Method

The sUE has a shorter processing duration than the legacy UE. Here, the legacy UE refers to a UE supporting a transmission time interval (TTI) (e.g., 1 subframe) defined in the existing LTE system.

Therefore, the sUE may access the network in a short time when not only transmitting and receiving data but also performing the initial access. That is, by shortening both the processing time of the network and the processing time of the UE, more UEs may access the network and communicate with each other.

The processing time used in this specification refers to a time required for the UE (or eNB) to process the signal, such as a time of decoding the signal, generating, and processing the signal, a time of encoding the signal, and the like.

Methods for shortening the processing time will be described.

When the sUE and the legacy UE need to transmit a physical random access channel (PRACH) in the same manner, that is, when a preamble is generated as a standard for all legacy UEs regardless of a UE type, and the same PRACH resource is used, a method for reducing the processing time for the sUE will be described below.

**(Method 1)**

Method 1 relates to a method for reducing an overall processing time by reducing a random access response (RAR) reception window size for the sUE.

Hereinafter, the random access response will be briefly expressed as a random access response (RAR).

Since the existing legacy UE may monitor one control region for each subframe, the size of the RAR reception window may not be constant. On the other hand, since the sUE may monitor the control region in a smaller unit, the control region may be monitored the same or more times as the legacy UE even if the size of the RAR reception window is reduced.

FIG. 21 illustrates one example illustrating an RAR reception window 22010 of the sUE and an RAR reception window 22020 of the existing legacy UE. Although the size of the RAR reception window of the UE supporting the sTTI is set smaller than the size of the RAR window of the existing legacy UE, it can be seen that the control region that may be monitored is larger than the control region which may be monitored by the legacy UE.

In addition, when the sUE and the legacy UE transmit the PRACH in the same scheme, the network should transmit the RAR to each of the sUE and legacy UE. Therefore, the network should distinguish two UEs (sUE and legacy UE), and distinguishing methods are as follows.

(First embodiment)

The first embodiment is a method for notifying the network of information thereof when the UE transmits a PRACH to the network. In such a scheme, the network may know whether the UE transmitting the PRACH is the UE supporting the sTTI or the existing legacy UE through the information received from the UE. For example, the UE may inform whether the UE supports the sTTI or the existing legacy UE with a flag of 1 bit when transmitting the PRACH. When the flag of 1 bit has a value '0', the UE transmitting the PRACH may mean the UE supporting the sTTI and when the flag of 1 bit has a value of '1', the UE transmitting the PRACH may mean the existing legacy UE.

(Second embodiment)

The second embodiment is a method for configuring some of the preambles to be used by only the sUE. The second embodiment may distinguish whether the UE transmitting the PRACH is the UE supporting the sTTI or the existing legacy UE without increasing a payload size of the PRACH. In other words, the second embodiment does not require additional modification of the existing scheme. However, since some of the preambles are configured to be used by only the sUE, the variety of preambles selected by the UEs may be reduced.

(Third embodiment)

The third embodiment is a method in which the sUE and the legacy UE generate the preamble in different schemes.
In this case, the legacy UE transmits the PRACH in the existing scheme and a preamble generation scheme for the sUEs follows a different scheme. As an example, a method for defining a random access-radio network temporary identifier (RA-RNTI) may be configured differently. For example, a parameter ti, which generates an existing RA_RNTI, is configured as a symbol index related function and System Frame Number (SFN)_id may be configured as a combination of a frame number and a sub-slot number or as a sub-slot number related function.

(Fourth embodiment)

The fourth embodiment is a method for configuring a plurality of formats of the PRACH and designating a processing time that may be used for each format when the format is configured.
That is, the fourth embodiment may define one or more PRACH formats and differently configure the size of the RAR reception window and the processing time supported for each format. In addition, a target received power may be separately configured for each of one or more configured formats.

(Fifth embodiment)

Similarly to the fourth embodiment, the fifth embodiment is a method for configuring a plurality of random access channel (RACH) configurations and differently designating the processing time which may be used for each RACH configuration. That is, the fourth embodiment may define one or more PRACH configurations and differently configure the size of the RAR reception window and the processing time supported for each configuration. In addition, the target reception power may be separately configured for each of the one or more configured configurations.
Such a scheme is applicable not only when the processing time is different, but also to an RACH procedure having a different quality of service (QoS) requirement (e.g., reliability requirement). As an example, in order to support the RACH procedure for a UE and a use case having a different Block Error Rate target (BLER target), the RACH format may be configured differently or one or more PRACH configurations may be given, and the RACH may be repeated for each configuration, and a resource configuration may be configured differently. In addition, the target SINR may be configured differently by configuring the target reception power differently according to the PRACH configuration or the RACH format. This may be to separately give parameters related to power control to be used later in relation to the corresponding RACH configuration/preamble. In this regard, a reference signal for calculating a pathloss may be configured differently for each BLER target, a latency target, or a target of a combination of BLER/latency, and a power control parameter may be configured differently. As an example, in the case of configuring a high BLER target, in addition to a cell specific reference signal (CRS), a Channel State Information-Reference Signal (CSI-RS) may be configured to be used together or only the CSI-RS may be configured to be used for a Radio Resource Management (RRM) or a pathloss measurement or a wideband CRS measurement may be configured to be used. Alternatively, it may be considered that a measurement gap section is configured differently, and an offset, an event, etc., related to the measurement to be used during handover may be configured differently. If the UE supports multiple BLER/latency targets and there are multiple configurations, it may be assumed that measurement is performed according to a most stringent requirement.

The above-described contents relate to a method for transmitting the PRACH preamble in relation with Method 1 and hereinafter, a method (Proposals 1 and 2) for configuring the size of the RAC reception window will be described in relation with Method 1.

(Proposal 1)

In Proposal 1, RAR window configuration information is added to a System Information Block (SIB).
The sUE receives the SIB including the RAR window configuration information from the network and decodes the information.
The sUE may monitor the control region in units of sTTIs in a window with a predetermined size according to the decoded information.

(Proposal 2)

In Proposal 2, the RAR reception window size is pre-defined for each sTTI processing unit (e.g., 2 OFDM symbol units, 3 OFDM symbol units, etc.) or the same RAR reception window size is defined without distinguishing for each sTTI processing unit.
In this case, the sUE may inform the network of an identity thereof by transmitting identity information thereof included in the preamble to the network.
In this case, the sUE automatically monitors the control region in units of sTTI.

**(Method 2)**

Method 2 relates to a method for reducing the processing time by quickly configuring a message 3 transmission time for an RRC connection request of the UE.
As described in the random access procedure (RACH procedure), the signals transmitted and received between the UE and the eNB in the random access procedure may also be expressed as message 1, message 2, message 3, and message 4. Therefore, hereinafter, the expressions of message 1, message 2, message 3 and message 4 will be mixedly used for convenience of description.
That is, Method 2 is to configure a transmission time for transmitting message 3 for the radio resource control (RRC) connection request in the random access procedure to a faster transmission time than in the existing system.
In the UE in the existing system (legacy UE), the legacy UE transmits message 3 at a time of subframe #n + 6 in the random access procedure. Here, #n represents a time when the UE receives a random access response (RAR) from the network.
In this method, the message 3 transmission time of the UE may be configured to a time earlier than #n + 6, for example, a time such as #n + 3, #n + 4, #n + 5, or the like. The network may transmit to the UE information on the message 3 transmission time earlier than in the existing system, which is included in the system information block (SIB).
In this case, the UE (e.g., sUE) needs to inform the network of the maximum capability that may transmit message 3 when transmitting the PRACH and the network may indicate a resource for message 3 transmission in the RAR based on a UE report.
As an example, X bits are added to the uplink grant transmitted in the RAR and according to the state of the corresponding bit, as an example, one of fast processing only support, short TTI (sTTI) processing of 2 or 3 OFDM symbols(OS) and fast processing support, and sTTI processing of 7 OFDM symbols and fast processing support or fast processing not support may be given. In this case, for example, the x bits may be 2 bits and have bit states of '00', '01', '10', and '11'.
More specifically, each of the bit states '00', '01', '10', and '11' may correspond to the processing time of the sUE. For example, '00' may correspond to 'fast processing only support', '01' may correspond to '2/3OS sTTI processing and fast processing', '10' may correspond to '7OS sTTI and fast processing', and last, '11' may correspond to 'No support of faster processing'.
When the UE supports the capability according to each state, message 3 is transmitted assuming that a message 3 resource is configured according to the processing time.
If the UE does not support the indicated capability, it is assumed that message 3 is transmitted according to the legacy processing time.
In this case, it may be assumed that the UE supporting fast processing may unconditionally reduce a message 3 timing or apart therefrom, the capability of the UE which supports the message 3 timing may be considered in unicast. This may then be a separate capability from processing time reduction.
In another method, all UEs access the network by sending message 3 at the time of #n + 6 during the initial access process and are in the connected mode and then the network may grasp the states of the UE and indicate a smaller value to the UE. This may be transmitted UE-specifically or UE-commonly. When the smaller value is UE-commonly transmitted, all UEs including the legacy UE may apply the corresponding value according to capabilities thereof.

As an example, when a faster message 3 value is indicated to the plurality of sUE in the connected mode and the legacy UE in the connected mode by a UE-common transmission scheme in the random access procedure, the plurality of sUE and the legacy UE may apply the corresponding value according to the capability. For example, it is assumed that the eNB transmits a message 3 transmission time value at the time of #n + 3 subframe to UEs connected to the eNB, UE-commonly. The plurality of sUEs (sUE 1 and sUE 2) and the legacy UEs (UE3) are connected to the eNB. A maximum message 3 transmission time capability of sUE 1 is #n + 2, the maximum message 3 transmission time capability of sUE 2 is #n + 4, and a faster message 3 transmission time is not applied to the legacy UE. At this time, the legacy UE and the plurality of sUEs apply the indicated message 3 transmission time according to the capabilities thereof. Therefore, the message 3 transmission of sUE 1 will be #n + 3 indicated by the eNB and the message 3 transmission of sUE 2 will be #n + 4 which is a value applied according to the capability thereof or more. The UE3, the legacy UE, will apply the #n + 6 subframe value. In this case, the UEs need to report the capabilities thereof to the network. In order to easily support the capability reporting, it is assumed that the UE may expect at least fast processing only when the random access procedure (RACH procedure) is started with a Physical Downlink Control Channel (PDCCH) order, so that the RAR may be transmitted according to the fast processing. The RAR may be transmitted even to the USS and in this case, it is assumed that hashing may not be applied and some candidates (e.g., AL 4 2 candidates) may be designated in advance and the corresponding candidates are monitored. As yet another example, when the UE receives a command by downlink control information (DCI) in the PDCCH, the UE may perform a legacy based PRACH operation and when receiving the command by short DCI (sTTI) or receiving the command through the sPDCCH, the UE may operate as an sTTI based PRACH.

**Processing units of UEs supporting sTTI when performing initial access**

Currently, the sTTI processing units include 2 OFDM symbols, 3 OFDM symbols, and 1 slot (7 OFDM symbols). When the initial access procedure is configured in the sUE, there is a need to configure the processing unit separately from the legacy UE. The processing unit of the sUE may be configured as follows.

(Embodiment 1) The network may allow the sUE to configure the processing unit. In this case, information related to the processing unit may be included in the system information block (SIB) and transmitted to the UE.

(Embodiment 2) The network may configure the processing unit in which one value is configured by default. For example, the processing unit may be configured in units of 2, 3, 5, or 14 OFDM symbol sizes.

(Embodiment 3) When the UEs are connected to the network and are in the connected mode, the network may configure an appropriate processing unit according to a communication environment. The network may transmit the configured processing unit to the UE UE-specifically or UE-commonly.

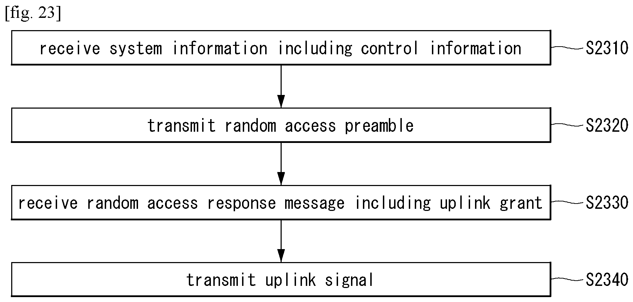

FIG. 23 illustrates an example of a UE operation in the present invention described above.

That is, FIG. 23 illustrates an operation of the UE for performing the initial access by using the short transmission time interval (TTI) in the wireless communication system.

First, the UE receives, from the eNB, system information including control information indicating a transmission time of an uplink signal (S2310).

Next, the UE transmits a random access preamble to the eNB (S2320).

Here, the random access preamble may include capability information of the UE.

In addition, the capability information of the UE may include information on an earliest transmission time of the transmission time of the uplink signal supportable by the UE.

Here, the uplink grant may include information on a resource for transmitting the uplink signal based on the capability information of the UE.

The random access preamble may further include an identifier indicating whether the UE is a UE supporting the sTTI or a Legacy UE.

The random access preamble may be generated based on an RA-RNTI.

Next, the UE receives, from the eNB, a random access response message including an uplink grant for transmitting the uplink signal in subframe #n (S2330).

The random access response message may further include information indicating a state of the UE.

Here, the state of the UE may be one of fast processing only support, short TTI (sTTI) processing of 2 or 3 OFDM symbols and fast processing support, and sTTI processing of 7 OFDM symbols and fast processing support or fast processing not support.

The size of the reception window associated with the random access response message may be configured for each sTTI processing unit.

Next, the UE transmits, to the eNB, the uplink signal in subframe #n + k based on the control information (S2440).

Here, the k is a natural number smaller than 6.

Additionally, the UE may receive multiple PRACH configurations from the eNB. Such a procedure may be performed before step S2310, between S2310 and S2340, after step S2340.

In the multiple PRACH configurations, a reception window size and a processing time of the random access response message which is supportable by each the multiple PRACH configurations may be differently configured for the multiple PRACH configurations.

The multiple PRACH configurations further include a target received power value configured differently for each the muliple PRACH configurations.

A more detailed content implemented in the UE for quickly performing the initial access proposed in this specification will be described with reference to the UE operating method of FIG. 23.

A UE for performing an initial access by using a short transmission time interval (TTI) in a wireless communication system includes: a transmitter for transmitting a radio signal; a receiver for receiving the radio signal; and a processor functionally connected to the transmitter and the receiver.

The processor controls the receiver to receive, from the eNB, system information including control information indicating a transmission time of an uplink signal.

In addition, the processor controls the transmitter to transmit the random access preamble to the eNB.

Further, the processor controls the receiver to receive, from the eNB, a random access response message including an uplink grant for transmitting the uplink signal in subframe #n.

In addition, the processor controls the transmitter to transmit, to the eNB, the uplink signal in subframe #n + k based on the control information.

Here, the k as a natural number smaller than 6 may be 3, 4, 5, etc.

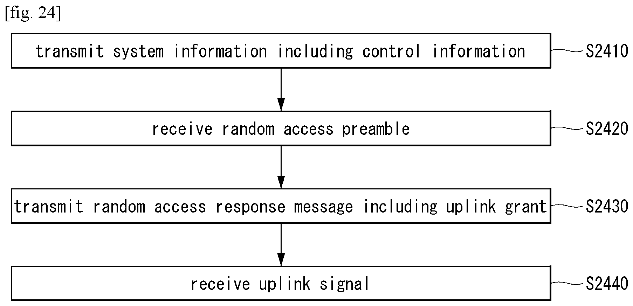

FIG. 24 illustrates one example of an eNB operation in the present invention described above.

That is, FIG. 24 illustrates an operation of the eNB for performing the initial access by using the short transmission time interval (TTI) in the wireless communication system.

First, the eNB transmits, to the UE, system information including control information indicating a transmission time of an uplink signal (S2410).

Next, the eNB receives the random access preamble from the UE (S2420).

Here, the random access preamble may include capability information of the UE.

In addition, the capability information of the UE may include information on an earliest transmission time of the transmission time of the uplink signal supportable by the UE.

Here, the uplink grant may include information on a resource for transmitting the uplink signal based on the capability information of the UE.

The random access preamble may further include an identifier indicating whether the UE is a UE supporting the sTTI or a Legacy UE.

The random access preamble may be generated based on an RA-RNTI.

Next, the eNB transmits, to the UE, a random access response message including an uplink grant for transmitting the uplink signal in subframe #n (S2430).

The random access response message may further include information indicating a state of the UE.

Here, the state of the UE may be one of fast processing only support, short TTI (sTTI) processing of 2 or 3 OFDM symbols and fast processing support, and sTTI processing of 7 OFDM symbols and fast processing support or fast processing not support.

The size of the reception window associated with the random access response message may be configured for each sTTI processing unit.

Next, the eNB receives, from the UE, the uplink signal in subframe #n + k based on the control information (S2440).

Here, the k is a natural number smaller than 6.

Additionally, the eNB may transmit multiple PRACH configurations to the UE. Such a procedure may be performed before step S2410, between S2410 and S2440, after step S2440.

In the multiple PRACH configurations, a reception window size and a processing time of the random access response message which is supportable for each the multiple PRACH configurations may be differently configured for each the multiple PRACH configurations.

The multiple PRACH configurations further include a target received power value configured differently for each PRACH configuration.

A more detailed content implemented in the eNB for quickly performing the initial access proposed in this specification will be described with reference to the eNB operating method of FIG. 24.

A eNB for performing an initial access by using a short transmission time interval (TTI) in a wireless communication system includes: a transmitter for transmitting a radio signal; a receiver for receiving the radio signal; and a processor functionally connected to the transmitter and the receiver.

First, the processor controls the transmitter to transmit, to the UE, system information including control information indicating a transmission time of an uplink signal.

Next, the processor controls the receiver to receive the random access preamble from the UE.

Next, the processor controls the transmitter to transmit, to the UE, a random access response message including an uplink grant for transmitting the uplink signal in subframe #n.

Next, the processor controls the receiver to receive, from the UE, the uplink signal in subframe #n + k based on the control information.

**Overview of Devices to Which Present Invention is Applicable**

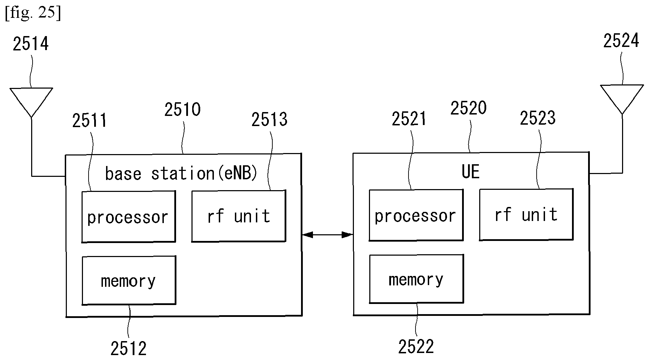

FIG. 25 illustrates a block diagram of a wireless communication device to which methods proposed by this specification may be applied.

Referring to FIG. 25, a wireless communication system includes an eNB 2510 and multiple user equipments 2520 positioned within an area of the eNB.

Each of the eNB and the UE may be expressed as a wireless device.

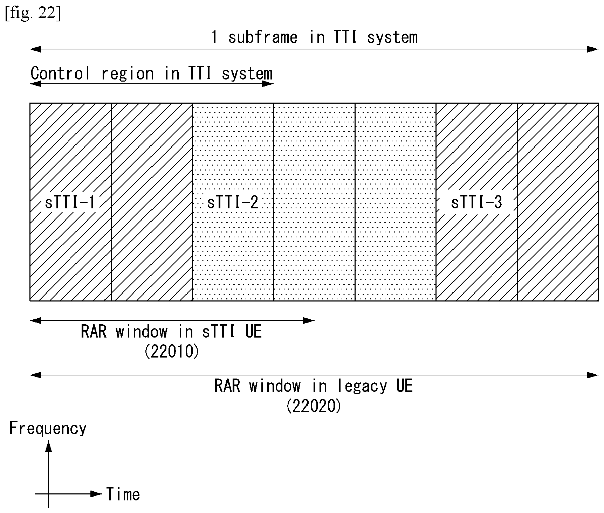

The eNB includes a processor 2511, a memory 2512, and a radio frequency (RF) module 2513. The processor 2511 implements a function, a process, and/or a method which are proposed in FIGS. 1 to 24 above. Layers of a radio interface protocol may be implemented by the processor. The memory is connected with the processor to store various information for driving the processor. The RF module is connected with the processor to transmit and/or receive a radio signal.

The UE includes a processor 2521, a memory 2522, and an RF module 2523.

The processor implements a function, a process, and/or a method which are proposed in FIGS. 1 to 19 above. Layers of a radio interface protocol may be implemented by the processor. The memory is connected with the processor to store various information for driving the processor. The RF module is connected with the processor to transmit and/or receive a radio signal.

The memories 2512 and 2522 may be positioned inside or outside the processors 2511 and 2521 and connected with the processor by various well-known means.

Further, the eNB and/or the UE may have a single antenna or multiple antennas.

The antennas 2514 and 2524 serve to transmit and receive the radio signals.

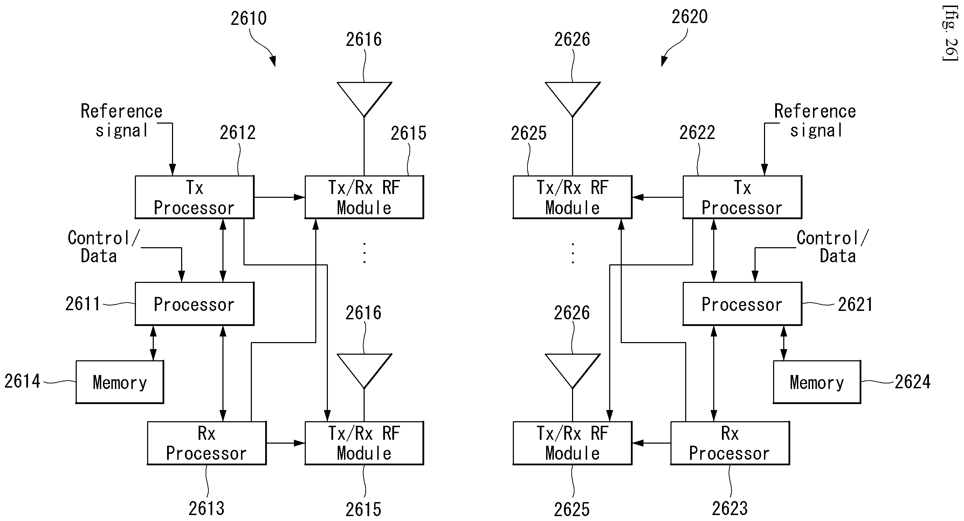

FIG. 26 illustrates another example of the block diagram of the wireless communication device to which the methods proposed in this specification may be applied.

Referring to FIG. 26, a wireless communication system includes an eNB 2610 and multiple user equipments 2620 positioned within an area of the eNB. The eNB may be represented by a transmitting apparatus and the UE may be represented by a receiving apparatus, or vice versa. The eNB and the UE include processors 2611.2621 and 2614.2624, memories 2615.2625 and 2612.2622, one or more Tx/Rx radio frequency (RF) modules 2613.2623 and 2616.2626, Tx processors 2112 and 2122, Rx processors 2113 and 2123, and antennas 2116 and 2126. The processor implements a function, a process, and/or a method which are described above. More specifically, a higher layer packet from a core network is provided to the processor 2611 in DL (communication from the eNB to the UE). The processor implements a function of an L2 layer. In the DL, the processor provides multiplexing between a logical channel and a transmission channel and allocation of radio resources to the UE 2620, and takes charge of signaling to the UE. The transmit (TX) processor 2612 implement various signal processing functions for an L1 layer (i.e., physical layer). The signal processing functions facilitate forward error correction (FEC) at the UE and include coding and interleaving. Encoded and modulated symbols are divided into parallel streams, each stream is mapped to an OFDM subcarrier, multiplexed with a reference signal (RS) in a time and/or frequency domain, and combined together by using inverse fast Fourier transform (IFFT) to create a physical channel carrying a time domain OFDMA symbol stream. An OFDM stream is spatially precoded in order to create multiple spatial streams. Respective spatial streams may be provided to different antennas 2616 via individual Tx/Rx modules (or transceivers, 2615). Each Tx/Rx module may modulate an RF carrier into each spatial stream for transmission. In the UE, each Tx/Rx module (or transceiver, 2625) receives a signal through each antenna 2626 of each Tx/Rx module. Each Tx/Rx module reconstructs information modulated with the RF carrier and provides the reconstructed information to the receive (RX) processor 2623. The RX processor implements various signal processing functions of layer 1. The RX processor may perform spatial processing on information in order to reconstruct an arbitrary spatial stream which is directed for the UE. When multiple spatial streams are directed to the UE, the multiple spatial streams may be combined into a single OFDMA symbol stream by multiple RX processors. The RX processor transforms the OFDMA symbol stream from the time domain to the frequency domain by using fast Fourier transform (FFT). A frequency domain signal includes individual OFDMA symbol streams for respective subcarriers of the OFDM signal. Symbols on the respective subcarriers and the reference signal are reconstructed and demodulated by determining most likely signal arrangement points transmitted by the eNB. The soft decisions may be based on channel estimation values. The soft decisions are decoded and deinterleaved to reconstruct data and control signals originally transmitted by the eNB on the physical channel. The corresponding data and control signals are provided to the processor 2621.

UL (communication from the UE to the eNB) is processed by the eNB 2610 in a scheme similar to a scheme described in association with a receiver function in the UE 2620. Each Tx/Rx module 2625 receives the signal through each antenna 2626. Each Tx/Rx module provides the RF carrier and information to the RX processor 2623. The processor 2621 may be associated with the memory 2624 storing a program code and data. The memory may be referred to as a computer readable medium.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

[Industrial Applicability]

In the wireless communication system of the present invention, the method for requesting scheduling for uplink data transmission is described primarily with various wireless communication systems in addition to an example applied to a 3GPP LTE/LTE-A system.

**Claims**

1. A method for performing an initial access by using a short transmission time interval (TTI) in a wireless communication system, the method performed by a UE, comprising:

    receiving, from a base station, system information on control information indicating a transmission time of an uplink signal;
    transmitting, to the base station, a random access preamble;
    receiving, from the base station, a random access response message including an uplink grant for transmitting the uplink signal in subframe #n; and
    transmitting, to the base station, the uplink signal in subframe #n+k based on the control information,
    wherein the k is a natural number smaller than 6.

2. The method of claim 1, wherein the random access preamble includes capability information of the UE,
    wherein the capability information of the UE includes information on an earliest transmission time of a transmission time of the uplink signal supportable by the UE, and
    wherein the uplink grant includes information on a resource for transmitting the uplink signal based on the capability information of the UE.

3. The method of claim 1, wherein the random access response message further includes information on a state of the UE, and
    wherein the state of the UE is one of fast processing only support, short TTI (sTTI) processing of 2 or 3 OFDM symbols and fast processing support, and sTTI processing of 7 OFDM symbols and fast processing support or fast processing not support.

4. The method of claim 1, wherein the system information further includes information on a size of a reception window associated with the random access response message.

5. The method of claim 4, wherein the size of the reception window associated with the random access response message is configured for each sTTI processing unit.

6. The method of claim 1, wherein the random access preamble includes an identifier indicating whether the UE is a UE supporting the sTTI or a Legacy UE.

7. The method of claim 6, wherein the random access preamble is generated based on an RA-RNTI.

8. The method of claim 1, further comprising:

receiving, from the base station, multiple PRACH configurations,
wherein a reception window size and a processing time of the random access response message which is supportable by each the multiple PRACH configurations are differently configured for each the multiple PRACH configurations.

9. The method of claim 8, wherein the multiple PRACH configurations further include a target received power value configured differently for each the multiple PRACH configurations.

10. A UE for performing an initial access by using a short transmission time interval (TTI) in a wireless communication system, the UE comprising:

a transmitter for transmitting a radio signal;
a receiver for receiving the radio signal; and
a processor functionally connected to the transmitter and the receiver,
wherein the processor is configured to
receive, from a base station, system information including control information indicating a transmission time of an uplink signal,
transmit, to the base station, a random access preamble, receive, from the base station, a random access response message including an uplink grant for transmitting the uplink signal in subframe #n, and
transmit, to the base station, the uplink signal in subframe #n+k based on the control information, and
wherein the k is a natural number smaller than 6.

11. The UE of claim 10, wherein the random access preamble includes capability information of the UE,
wherein the capability information of the UE includes information on an earliest transmission time of a transmission time of the uplink signal supportable by the UE, and
wherein the uplink grant includes information on a resource for transmitting the uplink signal based on the capability information of the UE.

12. The UE of claim 10, wherein the random access response message further includes information indicating a state of the UE, and
wherein the state of the UE is one of fast processing only support, short TTI (sTTI) processing of 2 or 3 OFDM symbols and fast processing support, and sTTI processing of 7 OFDM symbols and fast processing support or fast processing not support.

13. The UE of claim 10, wherein the system information further includes information on a size of a reception window associated with the random access response message.

14. The UE of claim 13, wherein the size of the reception window associated with the random access response message is configured for each sTTI processing unit.

15. The UE of claim 10, wherein the random access preamble includes an identifier indicating whether the UE is a UE supporting the sTTI or a Legacy UE.

16. The UE of claim 15, wherein the random access preamble is generated based on an RA-RNTI.

17. The UE of claim 10, wherein the processor is configured to receive , from the base station, multiple PRACH configurations, and
wherein a reception window size and a processing time of the random access response message which is supportable by each the multiple PRACH configurations are differently configured for each the multiple PRACH configurations.

18. The UE of claim 17, wherein the multiple PRACH configurations further include a target received power value configured differently for each the multiple PRACH configurations.

[fig. 1]

[fig. 2]

(a) CONTROL PLANE PROTOCOL STACK

(a) USER PLANE PROTOCOL STACK

[fig. 3]

EP 3 675 588 A1

INITIAL CELL SEARCH — PSS/SSS& [DLRS]& PBCH (S201)

SYSTEM INFORMATION RECEPTION — PDCCH/PDSCH (BCCH) (S202)

RANDOM ACCESS PROCEDURE — PRACH (S203), PDCCH/PDSCH (S204), PUSCH (S205), PDCCH/PDSCH (S206)

GENERAL DL/UL Tx/Rx — PDCCH/PDSCH (S207), PUSCH/PUCCH (S208)

· DL/UL ACK/NACK
· UE CQI/PMI RI REPORT USING PUSCH AND PUCCH

[fig. 4]

EP 3 675 588 A1

Radio frame

slot

| #0 | #1 | #2 | ··· | #18 | #19 |

subframe

(a)

One radio frame, Tf = 307200Ts = 10ms

One half frame,
153600Ts=5ms

One slot
Tslot=15360Ts

30720Ts

| Subframe #0 | | | | Subframe #2 | Subframe #3 | Subframe #4 | Subframe #5 | | | | Subframe #7 | Subframe #8 | Subframe #9 |

One subframe
30720Ts

DwPTS GP UpPTS

DwPTS GP UpPTS

(b)

[fig. 5]

One downlink slot

7 OFDM symbols

$N^{DL}$ x 12 subcarriers

12 carriers

Resource block
7x12 REs

Resource element

[fig. 6]

Control region      Data region

First slot     Second slot

Frequency

One subframe

Time

[fig. 7]

[fig. 8]

| CIF (3) | 0/1A | FH | Resource block assignment | MCS/RV (5) | NDI | TPC (2) | DM RS CS (3) | DAI (2) | CQI req. | SRS | RAT |
|---------|------|-----|---------------------------|------------|-----|---------|--------------|---------|----------|-----|-----|

[fig. 9]

EP 3 675 588 A1

[fig. 10]

CQI

CZ

IFFT   IFFT   IFFT   IFFT   IFFT

← 1 slot (60 res except for rs) →

[fig. 11]

[fig. 12]

ACK=1        DTX/NACK=0
  -1              +1

(a) BPSK

+j (ACK, ACK)=10

(ACK, ACK)=11        DTX (NACK, NACK)=00
                          +1

-j (NACK, ACK)=01

(b) QPSK

[fig. 13]

[fig. 14]

| R | R | E | LCID | Oct1 |
| F | | | L | Oct2 |

(a) R/R/E/LCID/F/L sub-header with
7-bit L field

| R | R | E | LCID | Oct1 |
| F | | | L | Oct2 |
| | | | L | Oct3 |

(b) R/R/E/LCID/F/L sub-header with
15-bit L field

[fig. 15]

| R | R | E | LCID | Oct1 |
|---|---|---|------|------|

R/R/E/LCID sub-header

[fig. 16]

(a)

| LCG ID | Buffer Size | Oct1 |

(b)

| Buffer Size #0 | Buffer Size #1 | Oct1 |
| Buffer Size #1 | Buffer Size #2 | Oct2 |
| Buffer Size #2 | Buffer Size #3 | Oct3 |

[fig. 17]

20MHz

DL component
carrier

PDCCH

Sub
frame

PDSCH

⇑ ⇓

UL component
carrier

Sub
frame

PUSCH

20MHz

(a)single cc

60MHz

20MHz | 20MHz | 20MHz

DL component
carrier A | DL component
carrier B | DL component
carrier C

PDCCH

Sub
frame

PDSCH

⇑ ⇓  ⇑ ⇓  ⇑ ⇓

UL component
carrier A | UL component
carrier B | UL component
carrier C

PUSCH

20MHz | 20MHz | 20MHz

60MHz

(b)Multiple ccs

50

[fig. 18]

UE                                                              eNB

                                                        S1801
              uplink scheduling request
                                                        S1803
                 ul grant for bsr
                                                        S1805
              buffer status reporting
                                                        S1807
               ul grant for actual data
                                                        S1809
                    actual data

(a)

UE                                                              eNB

                                                        S1811
        uplink scheduling request +BSR
                                                        S1813
               ul grant for actual data
                                                        S1815
                    actual data

(b)

[fig. 19]

[fig. 20]

[fig. 21]

UE                                    base station

S21010

① ——————Random Access Preamble——————▶
(RA-RNTI= 1 + t_id+10*f_id)

S21020

◀——————Random Access Response—————— ②
(Preamble index, TA, T-RNTI, UL grant)

S21030

③ ——————Scheduled Transmission——————▶
RRC connection Request
(+NAS attach request)

S21040

◀——————Contention Resolution—————— ④
RRC connection Setup (C-RNTI)

(a)

UE                                    base station

S21110

——————RA Preamble assignment——————▶ ①

S21120

② ◀——————Random Access Preamble——————
(RA-RNTI= 1 + t_id+10*f_id)

S21130

——————Random Access Response——————▶ ③
(Preamble index, TA, UL grant)

(b)

EP 3 675 588 A1

[fig. 22]

1 subframe in TTI system

Control region in TTI system

sTTI-1  sTTI-2  sTTI-3

RAR window in sTTI UE
(22010)

RAR window in legacy UE
(22020)

Frequency

Time

[fig. 23]

| receive system information including control information | ⌐S2310 |
|---|---|

↓

| transmit random access preamble | ⌐S2320 |
|---|---|

↓

| receive random access response message including uplink grant | ⌐S2330 |
|---|---|

↓

| transmit uplink signal | ⌐S2340 |
|---|---|

[fig. 24]

```
┌─────────────────────────────────────────────────────────────┐
│  transmit system information including control information    │───S2410
└─────────────────────────────────────────────────────────────┘
                               │
                               ▼
┌─────────────────────────────────────────────────────────────┐
│            receive random access preamble                     │───S2420
└─────────────────────────────────────────────────────────────┘
                               │
                               ▼
┌─────────────────────────────────────────────────────────────┐
│ transmit random access response message including uplink grant│───S2430
└─────────────────────────────────────────────────────────────┘
                               │
                               ▼
┌─────────────────────────────────────────────────────────────┐
│               receive uplink signal                           │───S2440
└─────────────────────────────────────────────────────────────┘
```

[fig. 25]

[fig. 26]

EP 3 675 588 A1

59

## INTERNATIONAL SEARCH REPORT

| | International application No. |
|---|---|
| | **PCT/KR2019/002297** |

**A.  CLASSIFICATION OF SUBJECT MATTER**

*H04W 74/00(2009.01)i, H04W 74/08(2009.01)i, H04W 48/12(2009.01)i, H04W 72/14(2009.01)i*

According to International Patent Classification (IPC) or to both national classification and IPC

**B.  FIELDS SEARCHED**

Minimum documentation searched (classification system followed by classification symbols)
H04W 74/00; H04L 1/00; H04L 5/00; H04W 72/04; H04W 72/12; H04W 74/08; H04W 48/12; H04W 72/14

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: initial access, transmission time interval (TTI), transmission time, random access
preamble, uplink grant, subframe

**C.  DOCUMENTS CONSIDERED TO BE RELEVANT**

| Category* | Citation of document, with indication, where appropriate, of the relevant passages | Relevant to claim No. |
|---|---|---|
| Y | WO 2017-028273 A1 (FUJITSU LIMITED) 23 February 2017<br>See page 5, lines 12-15; page 6, lines 10-15; page 15, lines 3-6; page 16, lines 23-26;<br>claims 4, 13-14; and figure 1. | 1-18 |
| Y | US 2017-0142712 A1 (ELECTRONICS AND TELECOMMUNICATIONS RESEARCH<br>INSTITUTE) 18 May 2017<br>See paragraphs [0063], [0073], [0090], [0096], [0099], [0150]; and figures 5, 8, 23. | 1-18 |
| Y | KR 10-2017-0134398 A (QUALCOMM INCORPORATED) 06 December 2017<br>See paragraph [0077]; and claims 1, 11, 17. | 8-9, 17-18 |
| A | KR 10-2017-0084754 A (ELECTRONICS AND TELECOMMUNICATIONS RESEARCH<br>INSTITUTE) 21 July 2017<br>See paragraphs [0007]-[0025]; and claim 1. | 1-18 |
| A | KR 10-2017-0128132 A (ASUSTEK COMPUTER INCORPORATION)<br>22 November 2017<br>See paragraphs [0271]-[0374]. | 1-18 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 JUNE 2019 (14.06.2019) | **14 JUNE 2019 (14.06.2019)** |

| Name and mailing address of the ISA/KR | Authorized officer |
|---|---|
| Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

| International application No. |
|---|
| **PCT/KR2019/002297** |

| Patent document cited in search report | Publication date | Patent family member | Publication date |
|---|---|---|---|
| WO 2017-028273 A1 | 23/02/2017 | CN 107852266 A<br>EP 3340504 A1<br>JP 2018-528677 A<br>KR 10-2018-0037233 A<br>US 2018-0167980 A1 | 27/03/2018<br>27/06/2018<br>27/09/2018<br>11/04/2018<br>14/06/2018 |
| US 2017-0142712 A1 | 18/05/2017 | KR 10-2017-0055911 A<br>US 10244526 B2 | 22/05/2017<br>26/03/2019 |
| KR 10-2017-0134398 A | 06/12/2017 | BR 112017021188 A2<br>CA 2977154 A1<br>CN 107432042 A<br>EP 3278620 A1<br>JP 2018-510583 A<br>US 2016-0295609 A1<br>WO 2016-161408 A1 | 03/07/2018<br>06/10/2016<br>01/12/2017<br>07/02/2018<br>12/04/2018<br>06/10/2016<br>06/10/2016 |
| KR 10-2017-0084754 A | 21/07/2017 | None | |
| KR 10-2017-0128132 A | 22/11/2017 | CN 107371255 A<br>EP 3244565 A2<br>EP 3244565 A3<br>JP 2017-204860 A<br>JP 6431953 B2<br>KR 10-1977464 B1<br>TW 201740753 A<br>US 2017-0332365 A1 | 21/11/2017<br>15/11/2017<br>10/01/2018<br>16/11/2017<br>28/11/2018<br>10/05/2019<br>16/11/2017<br>16/11/2017 |

Form PCT/ISA/210 (patent family annex) (January 2015)